# EUROPEAN PATENT APPLICATION

(11) **EP 1 118 932 A2**
(43) Date of publication of application: **25.07.2001**
(21) Application number: 01100165.8
(22) Date of filing: 16.01.2001
(51) Int. Cl.: G06F 3/12

(54) **An image-forming system employing a cartridge**

(30) Priority: 19.01.2000 JP 2000014050; 28.06.2000 JP 2000194442; 10.11.2000 JP 2000344486
(71) Applicant: Seiko Epson Corporation, Shinjuku-ku, Tokyo 163-0811 (JP)
(72) Inventor: Kurata, Kenichi, Seiko Epson Corp., Suwa-shi, Nagano-ken 392-8502 (JP); Asauchi, Noboru, Seiko Epson Corp., Suwa-shi, Nagano-ken 392-8502 (JP)
(74) Representative: HOFFMANN - EITLE

(57) **Abstract**

Contained in EEPROM 21 of ink cartridge 19 is lottery determination data necessary for carrying out lottery determination, and prize data necessary for awarding a prize to a user when something has been won as a result of the lottery determination. Printing processing circuit 15 of inkjet printer 5 reads the lottery determination data from EEPROM 21 of ink cartridge 19, and uses that data to carry out lottery determination. If the results of that determination indicate that something has been won, printing processing circuit 15 reads the prize data from EEPROM 21 of ink cartridge 19, and communicates that data to printer driver 7. Printer driver 7 uses the prize data to perform processing for awarding a prize (e.g., access to a special URL) to a user. In addition, when a user makes a used cartridge available for recovery by a manufacturer, valuable points are awarded to the user based on data recorded in EEPROM 21 of ink cartridge 19.

## Description

### FIELD OF THE INVENTION

The present invention relates to an image-forming system employing a printer, copier, facsimile machine, or other such image-forming apparatus which forms an image through use of an inkjet method, an electrophotographic method, or other such method. While the present invention may be applied to any image-forming system which employs a cartridge, by way of example the following description treats the case of an inkjet printer such as may be used as a computer peripheral device.

### BACKGROUND

Inkjet printers (hereinafter "printers") wherein replaceable ink cartridges (hereinafter "cartridges") are provided with semiconductor memories or other such memory elements are known. Cartridges employed in such printers use semiconductor memories for management of remaining ink level and the like.

What usually happens is that when cartridge ink levels are nearly empty, the user is alerted of this fact by the printer or printer driver, and the user replaces the cartridge with another, new cartridge. The used cartridge, including the semiconductor memory it contains, is then ordinarily discarded by depositing it in a wastebasket or the like.

However, the cartridge, made as it is of synthetic resin, could be recycled if it were recovered and filled with ink, and the semiconductor memory could likewise be recycled. But despite this, the used cartridge is simply discarded in disposable fashion, and this represents considerable waste of resources. Nor is such disposal of chemical products preferred from the standpoint of environmental protection. In light of such facts, some retailers employ a recycling dropoff box for recovery of used cartridges.

However, the cooperation of the user is necessary for recovery of used cartridges, and recovery of all used cartridges is difficult.

Moreover, such printers utilize cartridge memory media to achieve increases in printer performance and improvements in user convenience. Further enhancement of such conventional advantages, and provision of more and additional benefits and conveniences for the user, are currently desired.

Furthermore, when such printers perform printing, a printer driver installed on a computer first prepares printing data which is then supplied to the printer, actual printing being executed by the printer in accordance with this printing data and with additional employment of firmware (programming or data written to ROM) or the like. The printer driver, firmware, and so forth are normally different for different printer models.

It sometimes happens, when a cartridge developed following manufacture of a particular printer is used, that an update of the printer driver, printer firmware, or the like becomes necessary. A desire may also arise to provide a user with information, data, computer-programs or the like appropriate to use of a particular cartridge (hereinafter "user support information"). (Except where otherwise indicated herein, the word "information" should be understood in its broadest sense to mean anything of non-random or meaningful symbolic content, whether it would be meaningful to a human being or a computer or anything else, and including for example non-executable data as well as computer-executable code.)

In accompaniment to such needs and desires, the provision of user support information by means of electronic mail, and methods of providing printer drivers, user support information, and so forth in online processing fashion by way of the Internet or the like, are gradually increasing in popularity. As examples of such provision of information, methods for providing information through use of WWW servers or automated distribution of electronic mail may be cited.

However, with such methods for providing information, a large burden is placed on a user before the user can receive the information the user requires. For example, in order to acquire a printer driver or other such required information, the user must search for the particular driver that the user requires among the voluminous amount of information present on the WWW server; and in the case of user support information sent via electronic mail, such a medium will typically contain a great deal of information other than the information the user requires, and again the user must search through all of that information until the required information is found.

Accordingly, it is an object of the present invention to provide a user with a motivation to actively cooperate in cartridge recovery, thus permitting effective recovery of used cartridges, as a result of which conservation of resources and protection of the environment are achieved.

It is another object of the present invention to utilize a memory medium provided in a replaceable cartridge to provide a user with more and additional benefits and conveniences.

It is yet another object of the present invention to enable a user to easily acquire appropriate information in correspondence to a cartridge.

### DISCLOSURE OF THE INVENTION

An image-forming system in accordance with a first aspect of the present invention comprises a removable cartridge possessing a memory element, a reading component for reading information from the memory element and an executing component for executing processing for providing a benefit to a user based on the information so read.

In a preferred embodiment, the information which is read is user support information for supporting use of an image-forming apparatus or a URL (Uniform Resource Locator) of a site on a communications network (e.g., a website) possessing such user support information, and the executing component executes processing for supporting the user based on that user support information or that URL.

A method for providing a benefit in accordance with a second aspect of the present invention comprises a reading step wherein information is read from a memory element attached to a cartridge used by an image-forming apparatus, a processing step wherein processing for providing a benefit to a user is executed based on information read at the reading step, and a benefit providing step wherein a benefit is provided to a user based on the results of processing executed at the processing step.

An image-forming system in accordance with a third aspect of the present invention employs a host apparatus and an image-forming apparatus which are mutually connected, a replaceable cartridge possessing a memory element being installed in the image-forming apparatus, and lottery determination data for determining whether something has been won being stored in that cartridge memory element. In accordance with this aspect of the present invention, the image-forming system comprises a reading component for reading the lottery determination data from the cartridge memory element, a lottery determination component that uses lottery determination data read by the reading component to determine whether something has been won, and a prize awarding component that performs processing for awarding a prize to a user in correspondence to the results of a determination carried out by the lottery determination component when the results of such determination indicate that something has been won.

For example, such an image-forming system may employ a host apparatus which is connected so as to permit communication with a prescribed server system on a communications network, and an image-forming apparatus which is connected thereto, and the reading component may be provided at the image-forming apparatus, with lottery determination data read at the image-forming apparatus being sent to the prescribed server system by the host apparatus. In accordance with this example, that prescribed server system may be equipped with the lottery determination component and prize awarding component, with lottery determination data from the host apparatus being used to determine whether something has been won, and with a prize being awarded to a user in correspondence thereto when the results of such determination indicate that something has been won.

An image-forming system in accordance with a fourth aspect of the present invention employs a host apparatus and an image-forming apparatus which are mutually connected, a replaceable cartridge possessing a memory element being installed in the image-forming apparatus, and prize data, being a prize itself or data for obtaining a prize from a prescribed prize awarding organization , being stored in that cartridge memory element. In accordance with this aspect of the present invention, the image-forming system is equipped with a component that determines whether something has been won in connection with use of the image-forming apparatus or the host apparatus, and that reads prize data from the cartridge memory element and that uses that prize data to award a prize to a user when the results of that determination indicate that something has been won.

An image-forming system in accordance with a fifth aspect of the present invention employs a host apparatus and an image-forming apparatus which are mutually connected, a replaceable cartridge possessing a memory element being installed in the image-forming apparatus, and usage data indicating an amount of use to date of the image-forming apparatus or the cartridge being stored in that cartridge memory element. In accordance with this aspect of the present invention, the image-forming system is equipped with a reading component that reads usage data from the cartridge memory element, and a prize awarding component that performs processing for awarding a prize to a user in correspondence to usage data read by the reading component.

An image-forming system in accordance with a sixth aspect of the present invention employs a host apparatus and an image-forming apparatus which are mutually connected, a replaceable cartridge possessing a memory element being installed in the image-forming apparatus. In accordance with this aspect of the present invention, data comprising at least one of the following is stored in that cartridge memory element: a URL of a network site which awards a prize, a keyword or password which must be supplied to a prescribed prize awarding organization in order obtain a prize, image-forming apparatus driver information serving as a prize itself, or image data serving as a prize itself in consideration for use of the cartridge. In accordance with this aspect of the present invention, the image-forming system is equipped with a reading component that reads such data from the cartridge memory element, and a prize awarding component that uses data so read to perform processing for awarding a prize to a user.

Such image-forming systems of the present invention utilize a memory element provided in a replaceable cartridge to provide a user with more and additional benefits and conveniences. As described above, the methods by which such benefits and conveniences are provided are such that a prize may be awarded as a result of a lottery-type determination, in correspondence to image-forming apparatus or cartridge use, or to all users without exception in exchange for the mere fact of purchase of a cartridge. Some examples of possible prizes include the URL of a network site which awards a prize, a keyword or password which must be supplied to a prescribed prize awarding organization in order obtain a prize, image-forming apparatus driver information serving as a prize itself, and image data serving as a prize itself. A great many variations are conceivable for use as image data, a few examples of which include images portraying scenes varying in content in correspondence to year, season, or time period (e.g., greeting cards, calendars, and the like), images portraying various events or corporate advertising, and so forth.

In a preferred embodiment of any of the foregoing image-forming systems, the image-forming system is further equipped with a component for performing processing for preventing repeated awarding of prizes.

A cartridge for an image-forming system in accordance with a seventh aspect of the present invention comprises a memory element for storing user information for identifying a user of the image-forming apparatus, that user information not being stored in this memory element at the time of shipping but being written thereto by the image-forming apparatus following installation thereof in the image-forming apparatus. As a result, in accordance with this aspect of the present invention, a user management system of the printer manufacturer may for example read that user information from the memory element of a recovered cartridge, or may receive notification of that user information from the image-forming apparatus, identify a user of the cartridge from that user information, and perform processing for providing a benefit to the user so identified.

In accordance with an eighth aspect of the present invention, an image-forming apparatus in which a cartridge having a memory element can be removably installed is equipped with a user information acquisition component that acquires user information for identifying a user of this image-forming apparatus, and a user information writing component that writes the user information to the cartridge memory element following installation of that cartridge in the image-forming apparatus. As a result, in accordance with this aspect of the present invention, a user management system of the printer manufacturer may for example read the user information from the memory element of a recovered cartridge, or may receive notification of that user information from an image-forming apparatus in which that cartridge is or was installed, identify a user of the cartridge from that user information, and perform processing for providing a benefit to the user so identified.

In accordance with a ninth aspect of the present invention, an image-forming apparatus in which a cartridge having a memory element can be removably installed is equipped with a user information acquisition component that acquires user information for identifying a user of this image-forming apparatus, a cartridge information reading component that reads cartridge information for identifying the cartridge from that cartridge memory element following installation of the cartridge in the image-forming apparatus, and a notification component that notifies an external user management system of that user information and cartridge information. As a result, in accordance with this aspect of the present invention, a user management system may identify which user used which cartridge from the user information and cartridge information communicated thereto from image-forming apparatuses, and perform processing for providing a benefit to a user so identified.

An image-forming apparatus cartridge recovery method in accordance with a tenth aspect of the present invention comprises a step wherein a used cartridge is recovered, a step wherein information is acquired for identifying a user of the cartridge from an image-forming apparatus in which the cartridge is or was installed or from a memory element of the cartridge so recovered, a step wherein a user of the cartridge is identified from the information so acquired, and a step wherein processing is performed for providing a benefit to a user so identified.

The foregoing recovery method in accordance with the eleventh aspect of the present invention makes it possible for a user to receive a benefit which is provided to the user contingent upon the user's cooperation in cartridge recovery, or contingent upon the fact that the user has purchased and used a cartridge, these latter activities representing prerequisites for recovery, and such benefit serves as inducement for obtaining the user's cooperation in cartridge recovery, thus increasing the cartridge recovery rate, as a result of which conservation of resources can be achieved and a contribution can be made toward cleaning of the earth's natural environment.

A method for providing information in accordance with an twelfth aspect of the present invention provides information in online processing fashion from an information-providing server in correspondence to a request from a client connected so as to permit communication with an image-forming apparatus in which a cartridge equipped with a memory element is installed. Here, in accordance with this aspect of the present invention, the client uses information stored in the memory element to connect to the information-providing server or to gain access to information thereon, and the client sends printing environment information indicating a printing environment of the image-forming apparatus to the information-providing server. Furthermore, the information-providing server sends printing execution information capable of being used to execute printing at the image-forming apparatus to the client in correspondence to information sent to the information-providing server.

Because the foregoing method for providing information in accordance with the twelfth aspect of the present invention provides information in online processing fashion from an information-providing server in correspondence to a request from a client connected so as to permit communication with an image-forming apparatus in which a cartridge equipped with a memory element is installed, a user of that cartridge can easily acquire information appropriate to the cartridge.

The printing execution information may be at least either printer firmware or a printer driver for use when the cartridge is employed to carry out printing.

Such ability to thus automatically acquire printer firmware or a printer driver suited to a cartridge installed in an image-forming apparatus from an information-providing server greatly alleviates the burden on the user.

Alternatively or in addition thereto, the printing execution information may be sample printing data to be supplied to the image-forming apparatus.

In such a case, this will allow the user to easily acquire sample printing data suited to a cartridge installed in an image-forming apparatus and carry out printing.

Furthermore, the information-providing server may provide a user at the client with information related to a cartridge capable of being used with the image-forming apparatus in correspondence to information sent to the information-providing server.

In such a case, this will allow user support information suited to a cartridge installed in an image-forming apparatus to be provided, permitting the user to easily acquire information that the user requires.

Furthermore, it is preferred in such a case that the information stored in the memory element comprise a password that will allow the client to gain permission to access information on the information-providing server, and that the client use this password to connect to the information-providing server or to gain access to information thereon, this being one example of use of information stored in the memory element to connect to the information-providing server or to gain access to information thereon.

In such a case, this will make it possible to limit provision of information to a user or users of a prescribed cartridge or type of cartridge only.

Moreover, it is preferred in such a case that the information on the information-providing server that the user is permitted to access vary in correspondence to the password.

In such a case, this will make it possible to vary the content of information provided to a user or users in correspondence to cartridge or cartridge type, permitting highly targeted provision of information.

Moreover, the present invention may be carried out in the context of a wide variety of modes and embodiments; for example, the present invention may be carried out in the context of a method for controlling provision of information or an apparatus for controlling provision of information, a computer program for implementing the functions of such a method or apparatus, a recording medium on which such a computer program is recorded, a data signal embodied in a carrier wave and comprising such a computer program, and in a variety of other modes and embodiments.

### BRIEF DESCRIPTION OF THE DRAWINGS

FIG. 1 is a block diagram showing the overall configuration of a printing system associated with a first embodiment of the present invention.

FIG. 2 is a schematic representation of various data memory areas provided at an EEPROM 21 of an ink cartridge 19 in an embodiment employing a lottery-type prize award method.

FIG. 3 is a flowchart showing a sequence of operations carried out by a printing processing circuit 15 of an inkjet printer 5 in an embodiment employing a lottery-type prize award method.

FIG. 4 is a flowchart showing a sequence of operations carried out by a printing processing circuit 15 when it is determined that something has been won during the lottery determination at step S2 in FIG. 3.

FIG. 5 is a flowchart showing a sequence of operations carried out when a printer driver 7 receives prize data.

FIG. 6 is a schematic representation of various data memory areas provided at an EEPROM 21 of an ink cartridge 19 in an embodiment employing a point-type prize award method.

FIG. 7 is a flowchart showing a sequence of operations carried out by a printing processing circuit 15 of an inkjet printer 5 in an embodiment employing a point-type prize award method.

FIG. 8 is a block diagram showing the configuration of a printing system such as might be possessed by a user in a second embodiment of the present invention.

FIG. 9 is a block diagram showing the overall configuration of a cartridge recovery system associated with a second embodiment of the present invention.

FIG. 10 is a flowchart showing a sequence of operations carried out by a user and a manufacturer in the context of same cartridge recovery system.

FIG. 11 is a schematic representation of various data memory areas provided at an EEPROM of a cartridge.

FIG. 12 is a flowchart showing a sequence of processing operations by means of which a host computer assigns a user ID to a printer driver.

FIG. 13 is a flowchart showing a sequence of processing operations at a printer and printer driver when a printer driver of a host computer writes a user ID to an EEPROM installed in a printer cartridge.

FIG. 14 is a flowchart showing a sequence of processing operations carried out by a user management system of a manufacturer in presenting a special consideration to a user.

FIG. 15 is a drawing to assist in describing a sample configuration of a system associated with a third embodiment of the present invention wherein printer operation support is carried out in online processing fashion.

FIG. 16 is a block diagram showing the configuration of a printer 1020, the central component of which is a control circuit 1040.

FIG. 17 is a flowchart showing a sequence of events occurring when information is provided in online processing fashion in a working example associated with a third embodiment of the present invention.

FIG. 18 is a flowchart showing a sequence of processing for detection of ink cartridges.

FIG. 19 is a flowchart showing a sequence of processing for determining whether an update is necessary.

FIG. 20 is an illustrative drawing showing an example of a dialog box by means of which it is possible to query whether updating of a printer driver or the like is to be carried out.

FIG. 21 is a flowchart showing a sequence of processing for updating a driver or firmware or both.

FIG. 22 is an illustrative drawing showing an example of a dialog box by means of which it is possible to conduct a query with regard to user support.

FIG. 23 is a drawing showing an example of a user registration form.

FIG. 24 is a flowchart showing a sequence of events occurring during provision of sample printing data in a working example associated with a third embodiment of the present invention.

FIG. 25 is an illustrative drawing showing an example of a page displaying a series of images capable of being printed using sample printing data.

FIG. 26 is a flowchart showing a sequence of events occurring when user support information is provided in a working example associated with a third embodiment of the present invention.

FIG. 27 is an illustrative drawing showing an example of a dialog box by means of which it is possible to carry out user support registration.

### BEST MODE FOR CARRYING OUT THE INVENTION

Below, several embodiments in which the present invention has been applied will be described with reference with to the drawings.

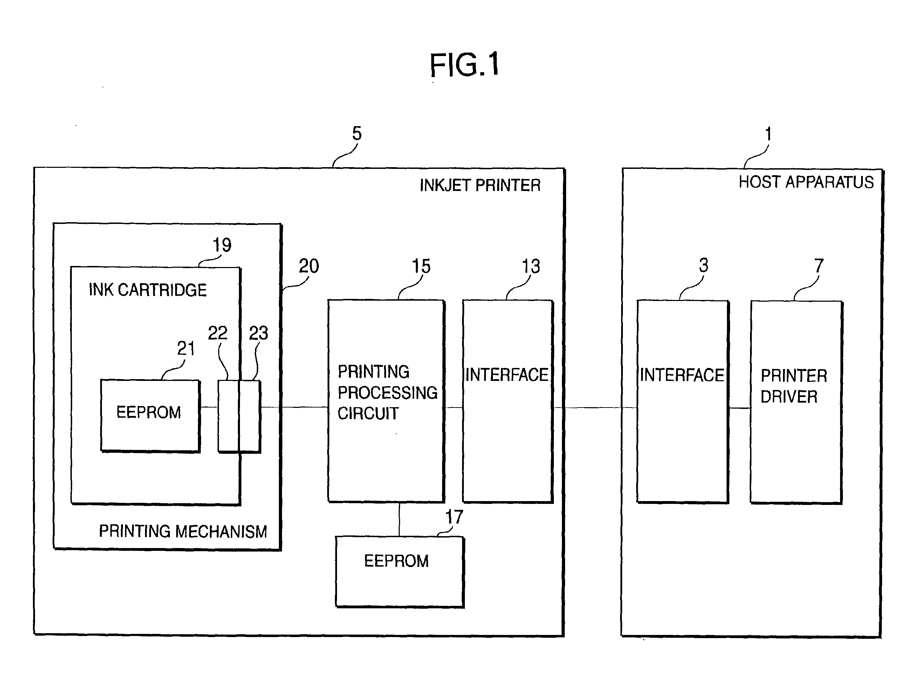

FIG. 1 shows the overall configuration of a printing system associated with a first embodiment of the present invention.

With reference now to FIG. 1, in the present embodiment, a host apparatus 1 is connected to an inkjet printer 5 by way of a printer interface circuit 3. This host apparatus 1 is typically a personal computer or other such general-purpose computer, and possesses a printer driver 7, this being software that carries out processing for preparation of printing data to be sent to printer 5. In addition to its traditional function of preparing data and sending this to printer 5, printer driver 7 also possesses a function, as described below, by means of which it processes prize data, described below, which is provided to it by inkjet printer 5 and provides a direct benefit or convenience to a user.

With continued reference to FIG. 1, in this embodiment, inkjet printer 5 is connected to host apparatus 1 by way of a host interface circuit 13. This inkjet printer 5 possesses a printing processing circuit 15 that carries out preparation of print images based on printing data transferred thereto by way of host interface circuit 13 from host apparatus 1, paper feed control, and so forth, and a printing mechanism 20 that carries out printing, under the control of printing processing circuit 15, of print images prepared by printing processing circuit 15. Printing processing circuit 15 is equipped with a nonvolatile memory medium, e.g. an EEPROM 17, for storing certain data.

While not shown in the drawings, printing mechanism 20 comprises a printhead, carriage, paper feed mechanism, and a head maintenance apparatus, a replaceable ink cartridge 19 for supply of ink to the printhead being removably installed therein. Ink cartridge 19 possesses a nonvolatile memory medium, e.g. an EEPROM 21, a terminal 22 providing access thereto being exposed at the exterior surface of cartridge 19. Upon complete installation of ink cartridge 19 in inkjet printer 5, access terminal 22 of EEPROM 21 of ink cartridge 19 is joined to connection terminal 23 provided at inkjet printer 5, electrically connecting EEPROM 21 and printing processing circuit 15. There may be only a single ink cartridge 19 or type of ink cartridge 19 installed in inkjet printer 5, or a plurality of ink cartridges 19 or types of ink cartridges 19 may be installed therein, permitting selection, for example, of large or small capacity, or dye-type ink or pigment-type ink, or the like in correspondence to the sort of printing work being done.

While there are generally speaking two types of ink cartridge as distinguished in terms of location with respect to printhead, these being the on-carriage type which is mounted on a carriage together with the printhead and the off-carriage type which is disposed at a stationary location removed from the carriage, ink cartridge 19 in the present embodiment may be of either type. This ink cartridge 19 may be used in rotated fashion on a plurality of inkjet printers by installing it and using it for a period on a certain inkjet printer and thereafter removing it therefrom and reinstalling it on a different printer.

With continued reference to FIG. 1, in addition to its traditional function of carrying out printing processing based on printing data sent thereto from host 1, this inkjet printer 5 also, as described below, possesses a prize award function by means of which it awards a prize to a user based on data previously stored in EEPROM 21 of ink cartridge 19.

While there are any number of specific methods by which this prize may be awarded, representative of such methods are a lottery-type prize award method wherein data for determining whether something has been won is pre-stored in EEPROM 21 of ink cartridge 19, and inkjet printer 5 uses this data to determine whether something has been done, a prize being awarded to a user if it is determined that something has been won; and a point-type prize award method wherein points are accumulated in accompaniment to use of ink cartridge 19, a prize being awarded in correspondence to the accumulated points. Below, embodiments employing these two methods will be described in detail.

Embodiments employing the lottery-type prize award method will first be described.

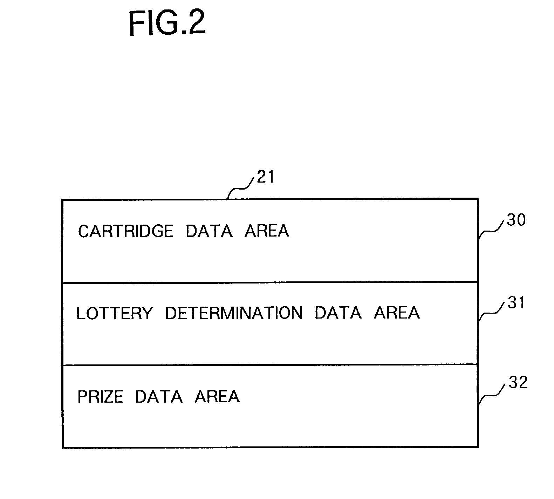

With continued reference to FIG. 1 and with additional reference now to FIG. 2, in one such embodiment, an EEPROM 21 of an ink cartridge 19 has data memory areas for example as shown in FIG. 2; to wit, a cartridge data area 30, a lottery determination data area 31, and a prize data area 32. Stored in cartridge data area 30 is data related to ink cartridge 19; e.g., remaining ink levels, cartridge identification information (e.g., manufacturer's serial number), cartridge type information, ink type information, usage history (e.g., date and time of first use, dates and times used, printer identification information (e.g., manufacturer's serial numbers) of printers used, etc.), printer control parameters, and so forth. Stored in lottery determination data area 31 is data necessary for inkjet printer 5 to determine whether something has been won (hereinafter "lottery determination data"). While a variety of types of data may be utilized as lottery determination data, some examples which may be cited are encoded lottery data and win-or-lose data, described below, as well as information stored in cartridge data area 30 (in which case, cartridge data area 30 would serve the purpose of lottery determination data area 31, and a separate lottery determination data area 31 would be unnecessary), and the like. Stored in prize data area 32 is data (hereinafter "prize data") which is sent to printer driver 7 of host apparatus 1 if inkjet printer 5 determines that something has been won. While a variety of types of data may be utilized as prize data, some examples which may be cited are a URL that only a lottery winner can access, a special keyword or password, printer driver information, mini-game, mini-tool, or other such application program, or image data, described below, and so forth. (Except where otherwise indicated herein, the word "information" should be understood in its broadest sense to mean anything of non-random or meaningful symbolic content, whether it would be meaningful to a human being or a computer or anything else, and including for example non-executable data as well as computer-executable code. Except where otherwise indicated herein, the word "data" should be understood in its broadest sense to mean anything of non-random or meaningful symbolic content, the word "data" being preferred for but not necessarily limited to situations involving information processing or computer operations, and generally including for example non-executable information as well as computer-executable code.)

Various operations which may be carried out in the context of this embodiment and variations thereon are described below.

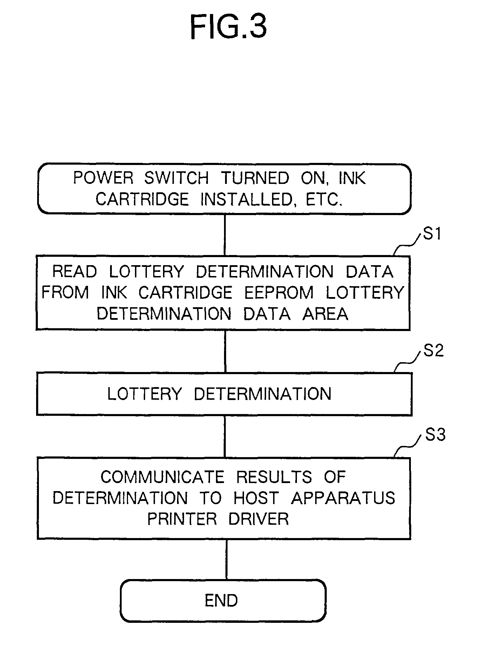

FIG. 3 shows a sequence of operations carried out by a printing processing circuit 15 of an inkjet printer 5 in an embodiment of the present invention.

With continued reference to FIGS. 1 and 2, and with additional reference now to FIG. 3, in the present embodiment, when a power switch on inkjet printer 5 is turned on, or an ink cartridge 19 is installed therein, or at a like time, printing processing circuit 15 accesses lottery determination data area 31 of EEPROM 21 of ink cartridge 19, reads lottery determination data therefrom (step S1), and uses that data to determine whether something has been won (step S2). The method by which this determination is performed varies in correspondence to the content of the lottery determination data. Below, taking the examples of three representative types of lottery determination data, methods by which determination of whether something has been won may be performed are indicated in correspondence thereto.

### (1) When Lottery Determination Data Is Win-Or-Lose Data

When lottery determination data is win-or-lose data, data indicating whether something has been won is stored in lottery determination data area 31. Printing processing circuit 15 determines directly from this win-or-lose data whether or not something has been won.

### (2) When Lottery Determination Data Is Encoded Lottery Data

When lottery determination data is encoded lottery data, it is not immediately apparent by simply reading the encoded lottery data whether or not something has been won, but instead printing processing circuit 15 must typically perform prescribed processing on the encoded lottery data to determine whether something has been won. For example, printing processing circuit 15 might use this encoded lottery data to carry out a prescribed arithmetic operation and determine whether something has been won from the results of this operation, or it may determine that something has been won if there is a match upon comparison with a winning value or values which has or have been pre-stored in printer driver 7 or EEPROM 17 of printer 5, or it may perform other such processing to make such determination.

### (3) When Lottery Determination Data Is Information Written to Cartridge Data Area 30

When lottery determination data is information written to cartridge data area 30, printing processing circuit 15 reads prescribed information, e.g., cartridge identification information, from cartridge data area 30, and carries out a prescribed arithmetic operation on this information to determine whether something has been won. For example, in the case where the cartridge identification information is a manufacturer's serial number, printing processing circuit 15 might determine whether that serial number is evenly divisible (i.e., divisible without remainder) by 10,000, and if it is so divisible, it may then determine that something has been won, or a like procedure may be used.

With continued reference to FIG. 3, upon thus completing such determination of whether something has been won (step S2), printing processing circuit 15 notifies printer driver 7 of host apparatus 1 of the results of that determination (step S3).

Upon receiving from printing processing circuit 15 the results of that determination of whether something has been won, printer driver 7 causes display indicating those results on a screen. Printer driver 7 might for example cause display of the message "Congratulations! You are a winner!" when the results of a determination which it receives indicate that something has been won, and might for example cause display of the message "Too bad. Better luck next time." when the results of a determination which it receives indicate that something has not been won.

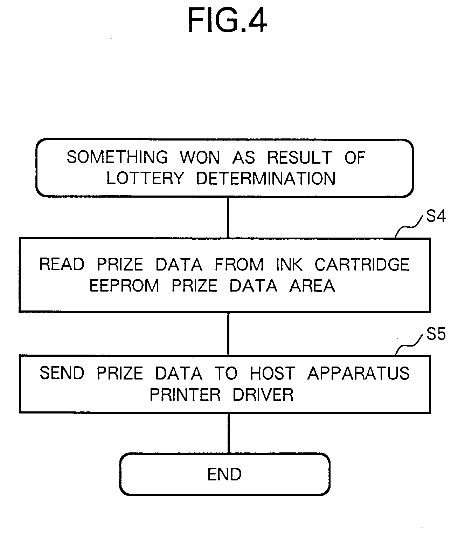

FIG. 4 shows a sequence of operations carried out by a printing processing circuit 15 when it is determined that something has been won during the determination at step S2 in FIG. 3.

With reference now to FIG. 4, when it is determined that something has been won during the determination at step S2 in FIG. 3, printing processing circuit 15 accesses prize data area 32 of EEPROM 21 of ink cartridge 19, and reads prize data therefrom (step S4). Furthermore, in such a case, that prize data is communicated to printer driver 7 of host apparatus 1 (step S5).

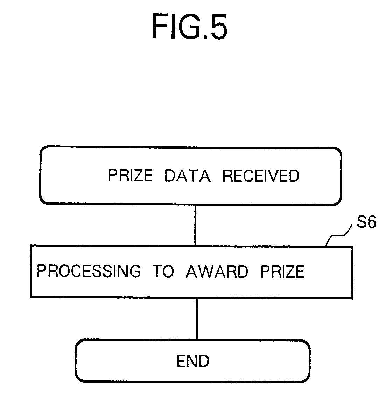

FIG. 5 is a flowchart showing a sequence of operations carried out when a printer driver 7 receives prize data.

With reference now to FIG. 5, upon receiving prize data, printer driver 7 uses the prize data to perform processing for awarding a prize to a user (step S6). The method by which this prize award processing is performed varies in correspondence to the content of the prize data. Below, taking the examples of five representative types of prize data, methods by which prize award processing may be performed are indicated in correspondence thereto.

### (1) When Prize Data Is Image Data or the Like

What is referred to here as "image data or the like" includes, for example, image data compatible with certain application software (e.g., three-dimensional data for use with three-dimensional image processing software, CAD images for use with CAD software, greeting card images for use with software for designing greeting cards, etc.), image data having general compatibility (e.g., greeting card images in a generally compatible format making them capable of being used with word processing software as well as greeting card design software), and the like, but is not limited to images, as this category of data may also include special fonts, sample text passages and templates, text data containing document formatting, and so forth.

With reference to FIG. 1, when the prize data is image data or the like, upon receiving the image data or the like representing prize data, printer driver 7 stores that image data or the like in a prescribed directory at host apparatus 1. For example, when printer driver 7 receives, as prize data, image data for use with a certain application, it may automatically store that image data in a folder wherein a program for that particular application is stored, or it may temporarily store that image data in a folder created for storage of prize data if such a folder exists. Printer driver 7 informs the user of the location (directory name and file name) at which that image data or the like is stored by displaying same.

### (2) When Prize Data Is Printer Driver Information

What is referred to here as "printer driver information" includes, for example, data necessary for upgrading a printer driver to a most recent version thereof, driver settings or parameters for special printing uses (e.g., for printing of photographs), and so forth.

With reference to FIG. 1, when the prize data is printer driver information, upon receiving the printer driver information representing prize data, processing is carried out either automatically or after first obtaining the approval of the user for validating that printer driver information. For example, taking the case of data for a printer driver update, after the update data has been stored in a prescribed directory, the procedure by which this printer driver will be updated might be displayed on a screen and execution of printer driver 7 might be terminated so as to allow the update to be carried out. Alternatively or in addition thereto, taking the case of driver settings or parameters for special printing uses, an appropriate name might be given thereto and this might be saved in a directory for such sets of parameters which is managed by printer driver 7.

### (3) When Prize Data Is Application Program

What is referred to here as "application program" includes, for example, mini-game or mini-tool program data, and so forth.

With reference to FIG. 1, when the prize data is application program, upon receiving the application program representing prize data, printer driver 7 stores that application program in a prescribed directory (e.g., a folder for storage of prize data) at host apparatus 1. Here, printer driver 7 may possess the ability to automatically launch this application program.

### (4) When Prize Data Is a Special Keyword or Password

What is referred to here as a "special keyword or password" includes certain information made known only, for example, to a user who has won something in lottery fashion, and is such that a prize, special service, or other such special consideration can be presented to the user when the user communicates such information to a prescribed service organization (e.g., the manufacturer of ink cartridge 19 or inkjet printer 5).

With reference to FIG. 1, when the prize data is a special keyword or password, upon receiving such a special keyword or password representing prize data, printer driver 7 displays that special keyword or password on a screen, and furthermore, instructs the user to generate a printed copy of the contents displayed on that screen and to mail or fax same to a prescribed service organization, or to use that special keyword or password to access a website of that service organization, or to send it via electronic mail, or communicate it by other such method to that service organization, in order to obtain some special consideration.

### (5) When Prize Data Is a Special URL

What is referred to here as a "special URL" is a URL which is made known only, for example, to a user who has won something in lottery fashion, and is such that the user can receive some special service from that URL when the user accesses that URL.

With reference to FIG. 1, when the prize data is a special URL, upon receiving such a special URL representing prize data, that URL may be displayed on a screen and the user informed thereof, or web browser software at that host apparatus 1 may be automatically launched and made to access a web page corresponding to that URL. Such a web page may be provided, for example, with various types of image data (e.g., greeting card image data or the like), various applications (e.g., games, tools, etc.), and other such data thought to be helpful or valuable to the user, which the user can download as he likes.

Furthermore, the prize data received by printer driver 7 is not limited to one of the foregoing types thereof, but any number of types thereof may be received together or separately. For example, printer driver 7 might receive both the special keyword and the special URL as prize data. In such a case, printer driver 7 might, for example, automatically launch a web browser software at host apparatus 1 and open a web page corresponding to that special URL, and furthermore, cause display of the special keyword and direct the user to enter that special keyword at a prescribed input field on that page. As a result, the user is made able to receive a special service (e.g., permission to access yet another special URL) in correspondence to the keyword.

With continued reference to FIG. 1, in such an embodiment, it is desirable that inkjet printer 5 (or more specifically, printing processing circuit 15 thereof) be prevented from repeatedly carrying out the foregoing determination of whether something has been won so as to avoid situations where prize data might be repeatedly sent to printer driver 7 based on the same prize-earning event or activity on the part of the user. After carrying out the foregoing lottery-type determination and communicating the results of that determination to printer driver 7, inkjet printer 5 may therefore, for example, delete the lottery determination data and prize data from EEPROM 21 of ink cartridge 19. Alternatively or in conjunction therewith, before carrying out the foregoing determination of whether something has been won, inkjet printer 5 may check to see whether the ink cartridge 19 which is currently installed is brand new (whether that cartridge has not been used before); and if ink cartridge 19 is not brand new, then an assumption might be made that determination of whether something has been won has already been carried out with respect to that cartridge, and further determination of whether something has been won can be prevented. Inkjet printer 5 can ascertain whether ink cartridge 19 is brand new, for example if the total amount of ink used is recorded at cartridge data area 30 of EEPROM 21 of ink cartridge 19, by checking to see whether the total amount of ink used is zero (zero total amount of ink used means that ink cartridge 19 is brand new).

Moreover, in the present embodiment, prize data -- e.g., image data, printer driver information, a URL, application program, etc. -- is provided to a user only when the results of a lottery-type determination indicate that something has been won. As a variation hereof, such data may be made available not as a prize only to a user who wins based on a lottery-type determination, but may be freely provided to a user without regard to any such determination. That is, such data may be provided to a user automatically in exchange for the mere fact of purchase of the ink cartridge. In such a case, while inkjet printer 5 need not necessarily carry out lottery-type determination at all, such determination may be carried out just the same, and an additional benefit may be provided to a user who wins such a lottery-type determination in addition to the foregoing benefit which is provided without exception as consideration for the mere purchase of the cartridge. For example, if the results of a lottery-type determination indicate that something has been won, a password or the like serving as proof thereof may be communicated to printer driver 7, and printer driver 7 may cause display of that password, and furthermore, may instruct the user to generate a printed copy of that password and to send same to the prescribed service organization, or to enter that password at a web page of the prescribed service organization. Upon confirming that something has been won based on the password communicated thereto by a user, the service organization awards a prize to the user. Such password or other means for proving that something has been won may, for example, be pre-stored in EEPROM 21 of ink cartridge 19, EEPROM 17 of inkjet printer 5, or printer driver 7.

Furthermore and with continued reference to FIG. 1, in another mode, inkjet printer 5 may communicate the results of the lottery-type determination to printer driver 7, and in addition, record same at EEPROM 21 of ink cartridge 19, and when, for example, the remaining ink levels of ink cartridge 19 becomes low and replacement becomes necessary, inkjet printer 5 or printer driver 7 may direct the user to send or bring the that ink cartridge 19 to the service organization, retailer, convenience store, or the like. As a result of so directing the user, the service organization or the like can ascertain the results of a lottery-type determination recorded in an EEPROM of an ink cartridge which is, for example, sent thereto, and can send a prize to the user if such organization or the like ascertains that something has been won. Moreover, the service organization or the like can recover ink cartridges from users, can recycle such ink cartridges, and can carry out processing in accordance with methods such as are appropriate to avoid polluting the environment.

Above, embodiments employing the lottery-type prize award method have been described. Below, embodiments employing the point-type prize award method will be described.

With continued reference to FIG. 1, in one such embodiment, inkjet printer 5 calculates an amount of use of inkjet printer 5 or ink cartridge 19 -- for example, the cumulative number of times that an ink cartridge 19 of the same manufacturer has been installed therein, the cumulative number of ink cartridges 19 of the same manufacturer which have been used therewith, total amount of ink used or cumulative number of printed dots or cumulative controlled length of time printing using ink cartridges 19 of the same manufacturer, or the like -- and stores this value in EEPROM 21 of ink cartridge 19. Such amount of use represents a cumulative value wherein any amounts of use corresponding to past usage of other cartridges of the same manufacturer which have yet to be applied toward receipt of a prize are added to same for the present cartridge. Inkjet printer 5 reads such amount of use from EEPROM 21 of ink cartridge 19, and awards points in correspondence thereto. Furthermore, a prize is awarded to the user in correspondence to those points.

In such an embodiment, a points/usage lookup table may be stored at EEPROM 17 of inkjet printer 5. Such a points/usage lookup table defines a relationship between the amount of use and the number of points corresponding thereto. For example, three levels of points may be established, with 1 point being assigned to amounts of use falling within a low range, 2 points being assigned to amounts of use falling within a moderate range, and 3 points being assigned to amounts of use falling within a high range (it goes without saying that the number of levels of points is not limited to three but may be chosen freely, and furthermore, that point levels need not be limited to integers but may also take on non-integer values as well).

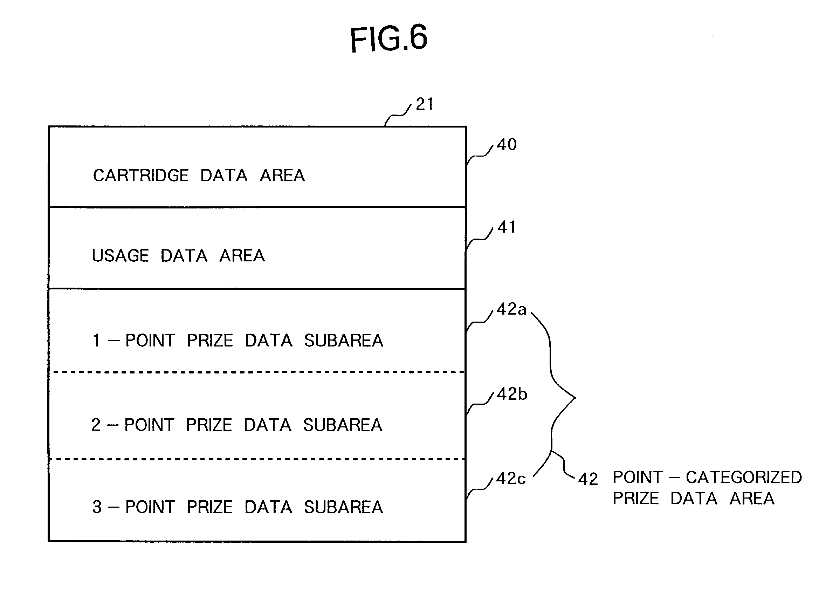

With continued reference to FIG. 1 and with additional reference now to FIG. 6, in such a case, EEPROM 21 of ink cartridge 19 may have data memory areas for example as shown in FIG. 6; to wit, a cartridge data area 40, a usage data area 41, and a point-categorized prize data area 42. Stored in cartridge data area 40 is data similar to data stored in cartridge data area 30 described with reference to FIG. 2; i.e., remaining ink levels, cartridge identification information, cartridge type information, ink type information, usage history, printer control parameters, and so forth. Stored in usage data area 41 is data indicating an amount of use as described above (hereinafter "usage data"). Stored in point-categorized prize data area 42 is data (hereinafter "point-categorized prize data") for providing users with prizes in correspondence to respective point levels; for example, special keywords or URLs, described below, or the like. Here, point-categorized prize data area 42 is subdivided, for example taking the case as described above in which three levels of points are established, into three data subareas; e.g., a 1-point prize data subarea 42a, a 2-point prize data subarea 42b, and a 3-point prize data subarea 42c (it goes without saying that the number of data subareas is not limited to three, it being possible to set the number thereof freely or so as to correspond to the number of levels of points). Stored within respective data subareas 42a, 42b, 42c is point-categorized prize data corresponding to respective point levels.

Various operations which may be carried out in the context of this embodiment and variations thereon are described below.

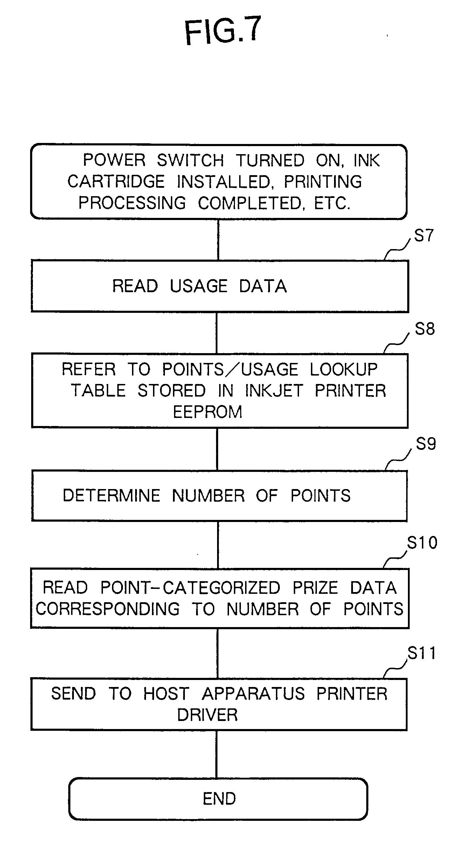

FIG. 7 shows a sequence of operations carried out by a printing processing circuit 15 of an inkjet printer 5 in an embodiment of the present invention.

With continued reference to FIGS. 1 and 6, and with additional reference now to FIG. 7, in the present embodiment, when inkjet printer 5 is turned on, or an ink cartridge 19 is installed therein, or printing processing is completed, or at a like time, printing processing circuit 15 accesses usage data area 41 of EEPROM 21 of ink cartridge 19, and reads usage data therefrom (step S7). Furthermore, it refers to a points/usage lookup table such as described above which is stored at EEPROM 17 (step S8), and determines a number of points corresponding to the amount of use indicated by the usage data so read (step S9). Furthermore, it accesses the point-categorized prize data subarea within EEPROM 21 of ink cartridge 19 which corresponds to the number of points determined from the usage data and lookup table, and reads therefrom point-categorized prize data corresponding to the number of points which was determined from the usage data and lookup table (step S10). For example, if the number of points determined from the usage data and lookup table is 1 point, 1-point prize data subarea 42a of EEPROM 21 of ink cartridge 19 is accessed, and point-categorized prize data corresponding to a point level of 1 point is read therefrom. Furthermore, this point-categorized prize data is sent to printer driver 7 of host apparatus 1 (step S11).

Upon receiving point-categorized prize data, printer driver 7 performs processing to award the user with a prize corresponding to the number of points based on that point-categorized prize data. The method by which this point-categorized prize award processing is performed varies in correspondence to the content of the point-categorized prize data. Below, taking the examples of two representative types of point-categorized prize data, the content of the processing which may be performed is indicated in correspondence thereto.

### (1) When Point-Categorized Prize Data Is a Special Keyword or Password

What is referred to here as a "special keyword or password" includes certain information made known only, for example, to a user who has attained a certain number of points, and is such that the user can receive some special consideration when the user communicates that special keyword or password to a prescribed service organization.

With reference to FIG. 1, when the point-categorized prize data is a special keyword or password, upon receiving such a special keyword or password representing point-categorized prize data, printer driver 7 displays that special keyword or password on a screen, and furthermore, instructs the user to generate a printed copy of that keyword or password and to mail or fax same to a prescribed service organization such as was described above, or to input that keyword or password at a website of such service organization, or to send that keyword or password to such service organization via electronic mail, or communicate it by other such method to such service organization.

### (2) When Point-Categorized Prize Data Is a URL

What is referred to here as a "URL" is a URL which is made known only, for example, to a user who has acquired a certain number of points, and is such that data of various uses can be received as prizes from a web page corresponding to that URL.

With reference to FIG. 1, when the point-categorized prize data is a URL, upon receiving such a URL representing point-categorized prize data, that URL may be displayed on a screen of host apparatus 1, or web browser software at host apparatus 1 may be automatically launched and made to open a web page corresponding to that URL.

With continued reference to FIG. 1, in such an embodiment, it is desirable that inkjet printer 5 (or more specifically, printing processing circuit 15 thereof) be prevented from repeatedly giving away point-categorized prize data based on the same prize-earning usage on the part of the user. Upon reading point-categorized prize data corresponding to a certain number of points, and thus to a certain amount of usage, and sending such point-categorized prize data to printer driver 7, inkjet printer 5 may therefore, for example, write data to EEPROM 21 of cartridge 19 such as will serve to indicate that the user has already received credit for usage corresponding to that number of points. As a result, because the amount of usage for which credit has been received is known, inkjet printer 5 can hereafter, in determining the number of points corresponding to usage, subtract an amount of use corresponding to the number of points for which credit has already been received and determine the number of points from the amount of use remaining after performing such subtraction, thus allowing prevention of repeated award of prizes based on the same usage. Alternatively or in combination therewith, in others methods for achieving the same result, upon awarding a prize corresponding to a certain point level, inkjet printer 5 may reset to zero the usage data stored within EEPROM 21 of cartridge 19 or may subtract therefrom an amount of use corresponding to the number of points for which credit has already been received, or may write both the usage data and the number of points to EEPROM 21 of cartridge 19 and subtract a number of points corresponding to the number of points for which credit has already been received when awarding a prize corresponding to a certain point level, thus allowing prevention of repeated award of prizes based on the same usage.

Furthermore and with continued reference to FIG. 1, in the present embodiment, inkjet printer 5 may communicate the results of the foregoing point level determination to printer driver 7, and in addition, record same at EEPROM 21 of ink cartridge 19, and when, for example, the remaining ink levels of ink cartridge 19 becomes low and replacement becomes necessary, inkjet printer 5 or printer driver 7 may direct the user to send or bring that ink cartridge 19 to the service organization, retailer, convenience store, or the like. In such a case, that service organization or the like can ascertain the number of points recorded in an EEPROM of an ink cartridge which is, for example, sent thereto, and can send a prize to the user in correspondence to that number of points. Moreover, the prescribed service organization or the like can recover ink cartridges which are subject to disposal, can recycle such ink cartridges, and can carry out processing in accordance with methods such as are appropriate to avoid polluting the environment.

Whereas a number of preferred modes have been described above in connection with a first embodiment of the present invention, these examples have been presented merely for purposes of describing the invention and it not intended that the invention should be limited thereby. The present invention may be carried out in the context of a wide variety of modes and embodiments. For example, with reference to FIG. 1, the foregoing lottery-type determination or foregoing point level determination may be carried out by printer driver 7 instead of printer 5. Furthermore, the foregoing lottery-type determination need not necessarily be performed on the basis of data stored within EEPROM 21 of cartridge 19. For example, such lottery-type determination may be carried out by performing arithmetic processing on the date on which or time at which cartridge 19 is installed in printer 5, the date on which or time at which a power switch of host apparatus 1 is turned on, or on the basis of other such information arising in connection with use of host apparatus 1 or printer 5. Furthermore, usage data for performing the foregoing point level determination may be stored at host apparatus 1 or EEPROM 17 of printer 5 to printer driver 7 in addition to or as an alternative to storing same at EEPROM 21 of cartridge 19. Furthermore, prize data need not necessarily be stored at EEPROM 21 of cartridge 19, an embodiment also being possible wherein lottery-type determination or point level determination is carried out by inkjet printer 5 or printer driver 7, but with a service organization or the like awarding the user with a prescribed prize as determined by the service organization or the like following communication of the results of such lottery-type determination or point level determination to the service organization or the like. Furthermore, when it is determined that something has been won as a result of the foregoing lottery-type determination or when it is determined that a certain point level has been achieved as a result of the foregoing point level determination, it is also possible to have inkjet printer 5 automatically print out a message indicating the results of such determination.

Next, a cartridge recovery system associated with a second embodiment of the present invention will be described in detail.

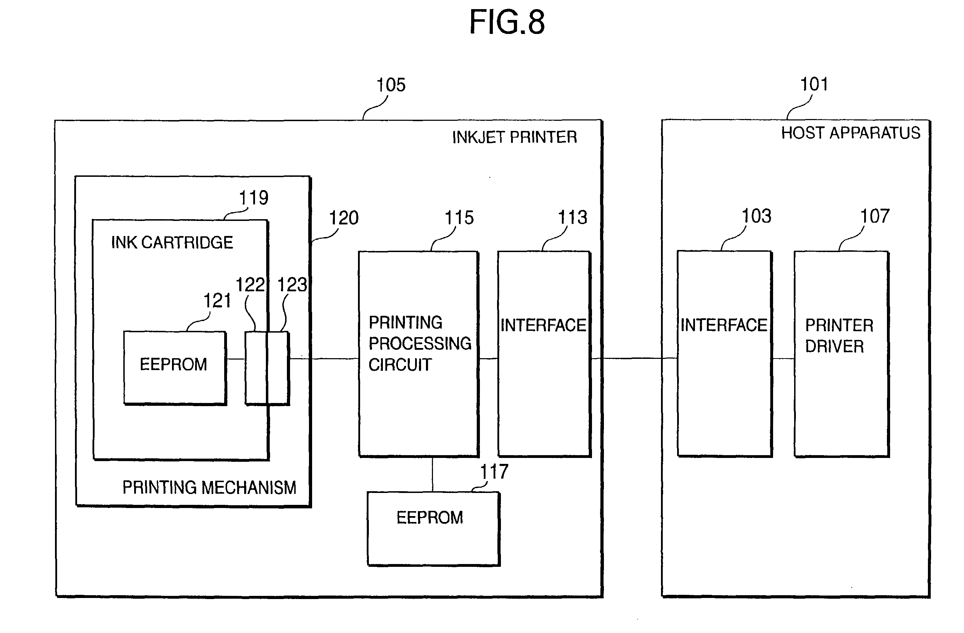

FIG. 8 shows the configuration of a printing system such as might be possessed by one of any number of individual users in this second embodiment of the present invention.

With reference now to FIG. 8, in the present embodiment, a host apparatus 101 is connected to a printer 105 by way of a printer interface circuit 103. This host apparatus 101 is typically a personal computer or other such general-purpose computer, and possesses a printer driver 107, this being software that carries out processing for preparation of printing data to be sent to printer 105. In addition to its traditional function of preparing data and sending this to printer 105, printer driver 107 also possesses functions, as described below, by means of which it registers a user ID provided to it by the printer manufacturer or other such information unique to the user (hereinafter "user information"), sends that user information to printer 105 and causes it to be stored at EEPROM 121 of cartridge 119, and so forth.

With continued reference to FIG. 8, in this embodiment, printer 105 is connected to host apparatus 101 by way of a host interface circuit 113. This printer 105 possesses a printing processing circuit 115 that carries out preparation of print images based on printing data transferred thereto from printer driver 107 of host apparatus 101, paper feed control, and other such printing processing, and a printing mechanism 120 that, under the control of printing processing circuit 115, carries out printing on paper of print images prepared by printing processing circuit 115 while subjecting that paper to paper feed operations,. Printing processing circuit 115 is equipped with a nonvolatile memory medium, e.g. an EEPROM 117, for storing certain data.

While not shown in the drawings, printing mechanism 120 comprises a printhead, carriage, paper feed mechanism, and a head maintenance apparatus, a replaceable cartridge 119 for supply of ink to the printhead being removably installed therein. Cartridge 119 possesses a nonvolatile memory medium, e.g. an EEPROM 121, a terminal 122 providing access thereto being exposed at the exterior surface of cartridge 119. Upon complete installation of cartridge 119 in printer 105, access terminal 122 of EEPROM 121 of cartridge 119 is joined to connection terminal 123 provided at printer 105, electrically connecting EEPROM 121 and printing processing circuit 115.

There may be only a single cartridge 119 or type of cartridge 119 installed in printer 105, or a plurality of ink cartridges 119 or types of ink cartridges 119 may be installed therein, permitting selection, for example, of large or small capacity, or dye-type ink or pigment-type ink, or the like in correspondence to the sort of printing work being done.

While there are generally speaking two types of cartridge as distinguished in terms of location with respect to printhead, these being the on-carriage type which is mounted on a carriage together with the printhead and the off-carriage type which is disposed at a stationary location removed from the carriage, cartridge 119 in the present embodiment may be of either type. This cartridge 119 may be used in rotated fashion on a plurality of printers by installing it and using it for a period on a certain printer and thereafter removing it therefrom and reinstalling it on a different printer.

With continued reference to FIG. 8, the printing system of this embodiment is such that user information (e.g., a unique user ID assigned to that user by the printer manufacturer, etc.) registered with printer driver 107 of host apparatus 101 is sent from printer driver 107 to printer 105, and is recorded at EEPROM 121 of cartridge 119. In addition, user information so recorded at EEPROM 121 may be input to a computer system of the printer manufacturer following recovery of cartridge 119, as is described below, and accumulated points, such as were described above, may be automatically credited to that user based on this user information.

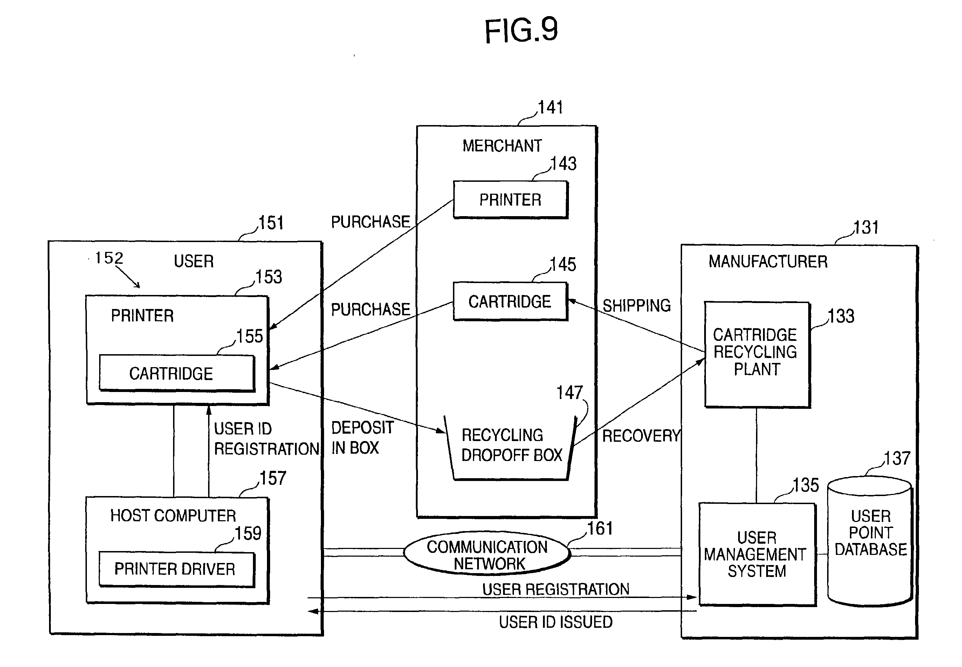

A mechanism by which this may be achieved is described in detail below. FIG. 9 shows the overall configuration of a cartridge recovery system associated with this second embodiment of the present invention. FIG. 9 also indicates printer and cartridge distribution and recovery routes.

With reference now to FIG. 9, a recovery system associated with this embodiment comprises a user management computer system 135 belonging to a manufacturer conducting manufacture of printers and cartridges as well as recycling of cartridges; a cartridge recovery route having as intermediary dropoff site an electronics store, a branch of a chain of convenience-type stores found throughout a particular region, or another such merchant 141 which sells the products; and any number of printing systems 152 (each of which is such as that shown in FIG. 8) belonging to any number of individual users 151. While FIG. 9 indicates that both sale of product and recovery dropoff are carried out by the same merchant 141, the store which handles sale of product and the store which handles recovery dropoff may be completely different. Furthermore, though only one of each is shown in the drawings, it should be apparent that there are normally many such users 151 and many such merchants 141. There may also be a plurality of user management systems 135 belonging to a manufacturer 131 or plurality of manufacturers 131.

In the present recovery system, manufacturer 131 has a cartridge recycling plant 133 for recycling and reshipping of recovered used cartridges, and a user management system 135 such as was mentioned above. User management'system 135 may carry out user-related information processing, including online or offline user registration for users purchasing printers, assignment of unique user IDs to users who complete user registration, communication of such user IDs to those users either online or offline, calculation of points for credit to users having user IDs matching the user IDs stored in the recovered used cartridges, awarding of special considerations in correspondence to accumulated points, and so forth. User management system 135 may be equipped with a user point database 137 which manages user IDs, accumulated number of points, and other such user information for each user; number of points for each cartridge type; and so forth.

With continued reference to FIG. 9, merchant 141, if a retailer, may have printers 143 and cartridges 145 on display for sale (only one of each being shown in the drawing); and if a recovery dropoff site, may have a recycling dropoff box 147 into which users 151 can deposit used cartridges.

In the present recovery system, a user 151 may have (as was described with reference to FIG. 8) a printer 153 in which a cartridge 155 is installed, and a printing system 152 comprising a host computer 157 possessing a printer driver 159 for control of the printer 153.

In addition, while not required, it is desirable in the present recovery system that the printing system 152 of the user 151 and the user management system 135 of the manufacturer 131 be capable of mutual communication at any time on demand by way of a telephone communications network, the Internet, or another such communications network 161.

Next, a sequence of operations which may be carried out by a user 151 and a manufacturer 131 in the context of the present cartridge recovery system will be described.

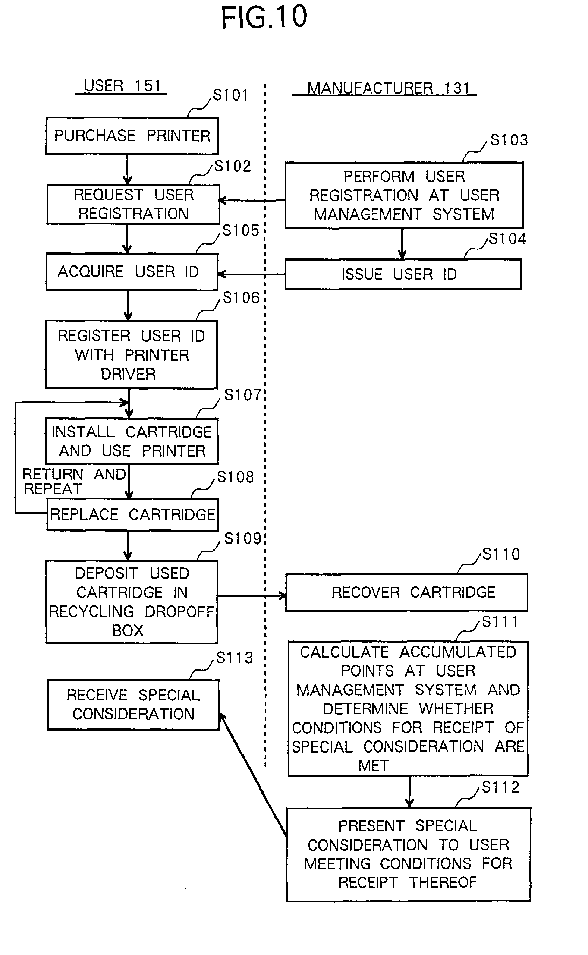

FIG. 10 is a flowchart showing a sequence of operations carried out by a user 151 and a manufacturer 131 in the context of same cartridge recovery system.

With continued reference to FIG. 9 and with additional reference now to FIG. 10, in the present recovery system, upon purchase of a printer 153 by a user 151 (step S101), user 151 submits a user registration request to manufacturer 131 (step S102). Here, the user registration request may be submitted in online processing fashion by way of communications network 161 from host computer 157, with the procedure therefor being conducted in communication with user management system 135 of manufacturer 131, or an equivalent procedure may be conducted by mail, electronic mail, or the like.

Upon so doing, at manufacturer 131, user management system 135 receives user registration information (name, address, type of printer, etc.) and performs user registration (step S103), and in addition, issues a unique user ID to that user (step S104).

Furthermore and with continued reference to FIGS. 9 and 10, the user ID so issued is sent by way of communications network 161 from user management system 135 to host computer 157 of user 151, or is communicated to the user 151 himself by mail, electronic mail, or the like. At host computer 157 of user 151, printer driver 159 receives that user ID from communications network 161 (or same is input by user if sent by mail or electronic mail) (step S105), upon which it is registered with and saved by that printer driver 159 (step S106). Here, in the event that host computer 157 of user 151 receives the user ID in online processing fashion by way of communications network 161, the user ID may be automatically registered with printer driver 159 of host computer 157 without the need for the user to take any particular action. On the other hand, in the event that the user ID is communicated to the user by mail or electronic mail, the user himself must input to printer driver 159 of host computer 157 the user ID so communicated.

Furthermore, in the present recovery system, following installation of a new cartridge 155 in printer 153, printer driver 159 may be launched and printing carried out (step S107). In such a case, printer driver 159 may write a user ID which is already registered therewith to an EEPROM in cartridge 155 by way of printer 153.

With continued reference to FIGS. 9 and 10, cartridge 155 may thereafter be used by printer 153 until such time as it runs out of ink, at which time that cartridge 155 may be removed from printer 153, and another, new cartridge may be installed in printer 153 (step S108). Step S107 may then be repeated for the newly installed cartridge. Used cartridge 155, on the other hand, may be hand-deposited into recycling dropoff box 147 of merchant 141 by the user (step S109).

In the present recovery system, used cartridges 155 collected in recycling dropoff box 147 may be periodically recovered by the manufacturer (step S110); and in addition, cartridge type and other such cartridge information, and user ID and other such user information, this information being stored in the EEPROMs thereof, may be automatically or manually input into user management system 135. For each user ID so input, user management system 135 may determine number of points in correspondence to cartridge type, adds those points to points previously earned, and determine whether the total points accumulated after addition of newly earned points is sufficient to meet pre-established conditions for receipt of special consideration (step S111).

In the event that the number of points accumulated for a particular user 151 do meet a condition for receipt of special consideration, manufacturer 131 may inform user 151 of the fact that user 151 is entitled to receive a special consideration and may present user 151 with a special consideration such as is in agreement with those conditions (step S112). As a result hereof, user 151 is made able to receive a special consideration (step S113). For example, a particular user ID may be credited with, say, 1 point for each cartridge that is recovered which bears that user ID, and a half-price discount certificate may be issued when 5 points have been accumulated, a coupon which can be exchanged for a free item may be issued when 10 points have been accumulated, and when 100 points have been accumulated the user may be presented with a recent-model printer or popular software, or may be awarded one year of free access to a subscription-type website, or the like.

While not indicated at the flowchart of FIG. 10, recovered used cartridge 155, on the other hand, undergoes ink refilling, EEPROM reprogramming, and other such recycling processing at cartridge recycling plant 133, and is shipped as recycled product.

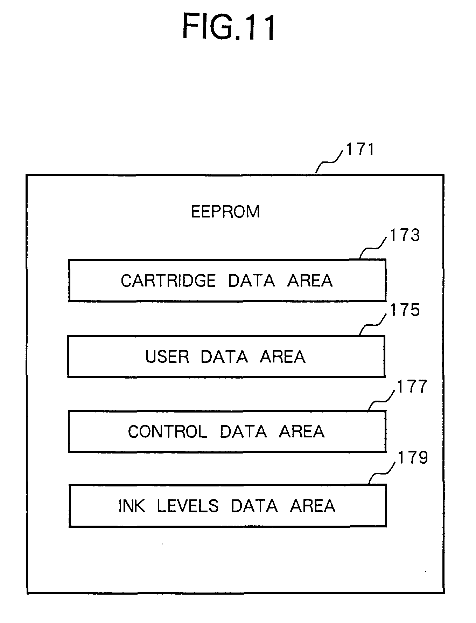

The foregoing completes description of the overall sequence of operations carried out in this example of a cartridge recovery system. Next, specific examples of information which may be stored at an EEPROM or EEPROMs of cartridge 155, and specific examples of sequences of processing operations carried out by printing system 152 and user management system 135 will be described in detail with continued reference to FIG. 9 and with additional reference to the block diagrams and flowcharts of FIG. 11 and the drawings following thereafter.

FIG. 11 shows various data memory areas provided at an EEPROM of a cartridge.

With reference now to FIG. 11, in the present embodiment, provided among the data areas of an EEPROM 171 of a cartridge there are: a cartridge data area 173 for storage of cartridge type, cartridge ID, and other such cartridge-related information for cartridge identification; a user data area 175 for storage of user ID and other such user-related information for user identification; a control data area 177 for storage of cartridge manufacturing date, ink characteristics, and other such information used in printing control; an ink levels data area 179 for storage of information regarding the amount or amounts of ink remaining in the cartridge; and other data areas not shown in the drawing for storage of other information.

Of these, the data written to cartridge data area 173 and user data area 175 bear a direct connection to the recovery processing that occurs in the present embodiment. In the present embodiment, the type of the cartridge and a unique ID identifying the cartridge are already written to cartridge data area 173 at the time a cartridge is shipped from the factory. In the present embodiment, user information is not present at user data area 175 at the time of shipment of cartridge 155, user ID and other such user information being written to user data area 175 by host computer 157 by way of printer 153 following installation of cartridge 155 in printer 153 by user 151.

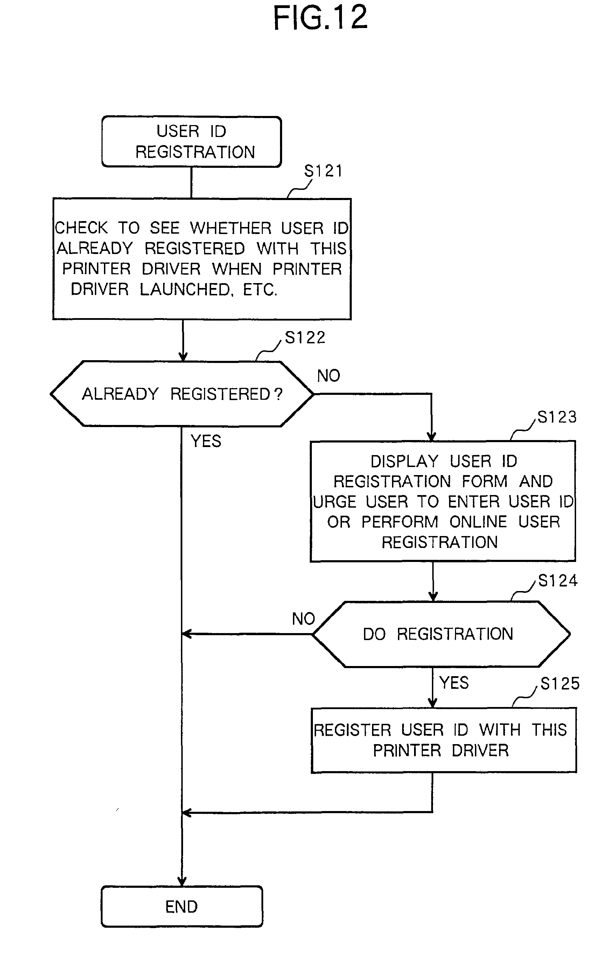

FIG. 12 is a flowchart showing a sequence of processing operations by means of which a host computer assigns a user ID to a printer driver.

With continued reference to FIG. 9 and with additional reference now to FIG. 12, in the present embodiment, a printer driver 159, upon being launched or at a similarly appropriate time, performs processing for registration of a user ID as follows. To wit, a check is performed to determine whether a user ID is already registered with this printer driver 159 (step S121). Because when user registration is performed online, as described above, a user management system 135 of a manufacturer automatically returns a user ID and this is automatically registered with printer driver 159, the result of such a check (step S122) following completion of user registration should in such a case always be "YES." On the other hand, in a case where registration has been carried out by mail or the like, so long as the user 151 himself has not input the user ID to printer driver 159, the user ID should still be unregistered therewith, and the result of the check performed at step S122 should be "NO."

With continued reference to FIGS. 9 and 12, if a user ID is already registered with printer driver 159 (YES at step S122), then this user ID registration processing terminates. On the other hand, if the user is not registered therewith (NO at step S122), then printer driver 159 causes display of a user ID registration form urging user 151 to enter a user ID or to carry out an online user registration procedure (step S123). However, if the user declines to act as so urged (NO at step S124), then this user ID registration processing terminates. Alternatively, if user 151 enters a user ID or carries out online user registration (YES at step S124), then the user ID entered by the user or the user ID received in online processing fashion from the manufacturer is registered with printer driver 159 (step S125) and this user ID registration processing terminates.

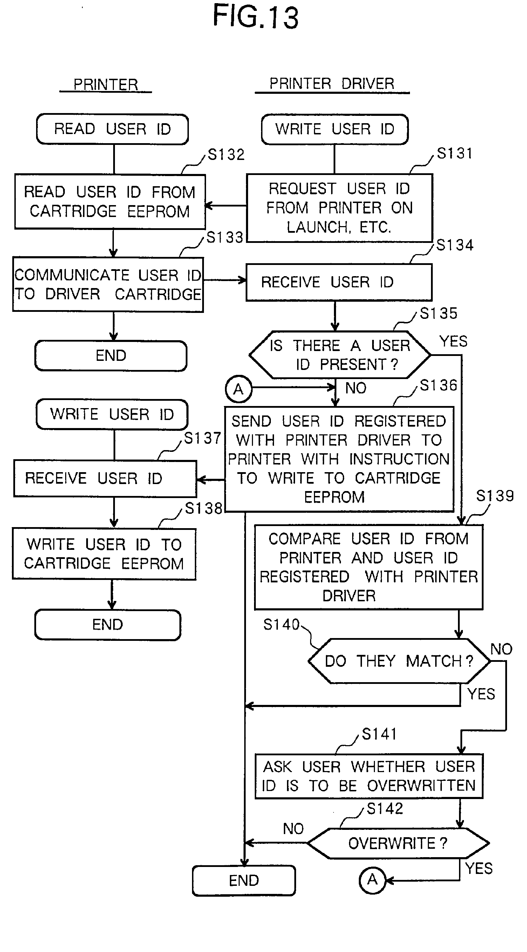

Next, a sequence of processing operations occurring when a user ID is sent from a printer driver 159 to a cartridge 155 of a printer 153 will be described with reference to FIG. 13.

With continued reference to FIGS. 9 and 11 and with additional reference now to FIG. 13, in the present embodiment, printer driver 159, upon being launched, carries out processing for writing of the user ID as follows. To wit, printer driver 159 issues a request to printer 153 for the user information written to user data area 175 of EEPROM 171 installed in cartridge 155 (step S131). Upon so doing, printer 153 reads the information present at user data area 175 of EEPROM 171 (step S132), and communicates the information at that user data area 175 to printer driver 159 (step S133).

Printer driver 159 receives the information which is present at user data area 175 (step S134), and determines whether that information is user information representing a proper user ID (step S135). If it is determined that this information does not represent a proper user ID (NO at step S135), then the user ID registered with this printer driver 159 is sent to printer 153, and printer 153 is instructed to write this user ID to EEPROM 171 of cartridge 155 (step S136). Upon so doing, printer 153 receives this user ID (step S137) and writes this user ID to user data area 175 within EEPROM 171 of cartridge 155.

On the other hand, if at step S135 it is determined that there already is a proper user ID at user data area 175 within EEPROM 171 of cartridge 155 (YES at step S135), then this user ID which was acquired from printer 153 is compared with the user ID registered with printer driver 159 (step S139) and a determination is performed to see whether the two match (step S140); and if the results of such determination indicate that they do match (YES at step S140), then, since the user ID is already stored at user data area 175 within EEPROM 171, this write processing terminates.

Alternatively, if it is determined at step S140 that the user ID which was acquired from printer 153 does not match the user ID which is registered with printer driver 159 (NO at step S140), user 151 is asked whether the user ID is to be overwritten (step S141). Such a situation arises when the same cartridge is rotated among inkjet printers belonging to a plurality of different users. Here, if the user answers that the user ID is not to be overwritten (NO at step S142), then this write processing terminates (in such a case, the result of the decision at step S140 will hereafter be interpreted as YES during the next and subsequent user ID write processing iterations, provided that the cartridge is not replaced). On the other hand, if the user answers that the user ID is to be overwritten (YES at step S142), then processing returns to step S136, the user ID registered with printer driver 159 is sent to printer 153, and this user ID is written to EEPROM 171 of cartridge 155, following which this write processing terminates. In addition, processing may also be such that when the result of the decision at step S140 is NO, processing proceeds immediately to step S136 without querying the user, forcing the user ID to be overwritten.

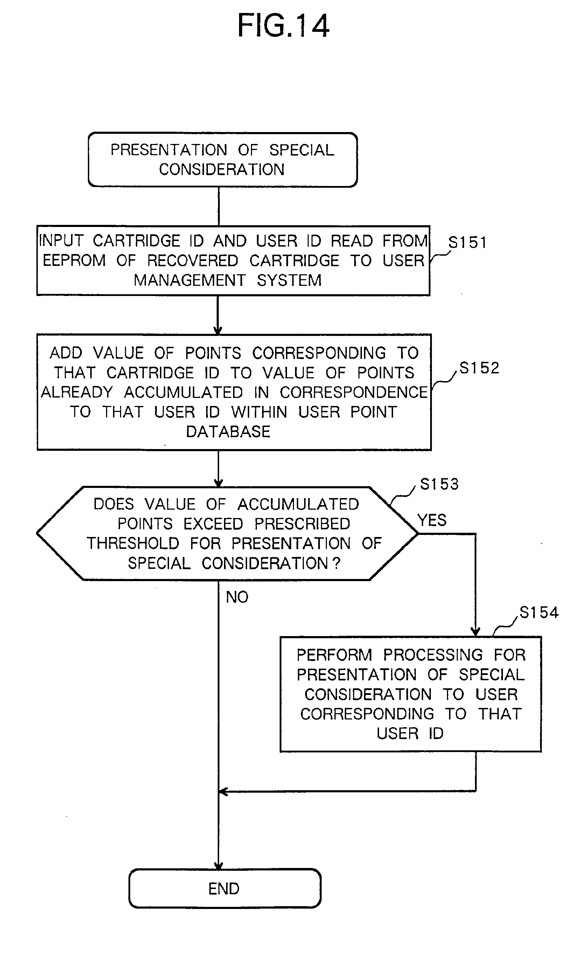

Next, a sequence of processing operations carried out by a user management system 135 of a manufacturer 131 for determining whether a special consideration is to presented to a user on the basis of a recovered cartridge 155 will be described with reference to FIG. 14.

With continued reference to FIGS. 9 and 11 and with additional reference now to FIG. 14, in the present embodiment, at, for example, a cartridge recycling plant 133 of a manufacturer 131 or the like, a cartridge ID and a user ID are read from an EEPROM 171 of a recovered cartridge 155 and are input to a user management system 135 (step S151). Such input may be carried out by a method wherein such IDs are manually entered by an operator from a keyboard or the like of a terminal of user management system 135, or may be carried out by a method wherein such IDs are automatically sent to user management system 135 from a memory read-write device that accesses EEPROM 171 of cartridge 155.

Furthermore, user management system 135 calculates a point value in correspondence to the cartridge ID input thereto (number of points credited may be made to vary depending on cartridge type, as for example a higher number of points for higher-priced cartridges and a lower number of points for lower-priced cartridges), and adds that point value to the number of points already accumulated in correspondence to that user ID within user point database 137 (step S152).

Moreover, a determination is made to see whether the value of accumulated points, including any newly added points, exceeds a previously established threshold for presentation of special consideration (step S153). If such threshold is exceeded (YES at step S152), then processing is carried out for presentation of special consideration to the user corresponding to that user ID (step S154). For example, processing may be carried out such that the user is notified of the fact that the user is eligible to receive special consideration, and if the user desires that special consideration, then that special consideration is awarded to the user and a number of points corresponding to that special consideration is subtracted from the points accumulated for that user; but if the user does not want that special consideration, then those accumulated points, including any newly added points, remain available for later use by the user.

Specifically, as mentioned above, the special consideration may be a cartridge discount certificate or a coupon to receive a free item, or it may be a certificate granting one year of free access to a subscription-type website or a special-issue CD-ROM containing an assortment of various types of image data, or it may be a present in the form of a recent-model printer or popular software, or it may be a right to receive something at a reduced purchase price, and so forth, or it may be something bearing no relationship whatsoever to printers, such as, for example, free tickets for travel to or lodging at a popular vacation resort, or the like. Moreover, calculation of points may be such as to include separately established bonus points in addition to regular points. For example, remaining ink levels may be determined from remaining ink level data areas in an EEPROM and twice the regular number of points may be awarded if all colors have been almost completely used up, or twice the regular number of points may be awarded if the EEPROM cartridge ID is 1,000, or other such conditions with game-of-chance-type elements may be arbitrarily established.

The foregoing embodiment has been presented merely for purposes of describing the invention and it not intended that the invention should be limited thereby. The present invention may be carried out in the context of a wide variety of modes and embodiments other than those specifically presented herein without departing from the spirit of the invention.

For example, whereas in the foregoing embodiment, as indicated at FIG. 10, recovery of a cartridge represents a necessary condition for accumulation of points by a user, this need not necessarily be the case, as the invention may be applied to a situation where points are accumulated as a result of the mere fact of purchase of a cartridge by a user. That is, a user may, for example, install a new cartridge in a printer, following which, when the printer driver is launched or at an appropriate such time, a host computer may obtain from that cartridge the cartridge type, cartridge ID, or other cartridge information such as is sufficient to prove that the cartridge is a cartridge of the manufacturer in question, and may send this cartridge information, along with the user ID or other such information necessary to identify the user, to a user management system of the manufacturer. Upon so doing, the user management system may add the number of points corresponding to this cartridge that was purchased to the points already accumulated for the user in question and may carry out determination to see whether conditions necessary for presentation of special consideration have been met. If such conditions have been met, the user management system may send an HTML document, message, or the like indicating that a special consideration may be received to the host computer of the user. Alternatively, if conditions for presentation of special consideration have not been met, the user management system may just the same send the host computer an HTML document or the like containing a map or list of stores indicating dropoff sites in the vicinity of the user's address together with a message indicating that the user's cooperation is requested for recovery of used cartridges, permitting such a page to be displayed on a screen at the host computer. Such steps will result in increased user cooperation in recovery of used cartridges. Furthermore, if that cartridge is recovered, additional points may be added to the points accumulated for the user.

Furthermore, whereas in the foregoing second embodiment the number of points for the cartridge was calculated from the type of the recovered cartridge, in another method the number of points for a cartridge might be written to an EEPROM of the cartridge at the point where the cartridge is being shipped from the plant -- e.g., 10 points for black ink and 20 points for colored inks, or the like -- making determination of the number of points for the cartridge as simple as reading the number of points from the EEPROM of the recovered cartridge.

Furthermore, such determination may also be carried out by performing calculation of accumulated points for used cartridges at the printing system, with the value of accumulated points being displayed at a screen of the host computer so as to permit the user to confirm same, with the value of those accumulated points being written to an EEPROM of the cartridge, and with the value of those accumulated points being communicated to the manufacturer at the time the cartridge is recovered, or with the value of those accumulated points being communicated from the host computer to the user management system of the manufacturer in online processing fashion. However, in the event that calculation of accumulated points is performed at the printing system, it will be necessary to check against repetitive use through utilization of cartridge ID, user ID, printer ID, or the like so as to prevent mistaking the same cartridge for a plurality of cartridges when the cartridge is repeatedly installed in the printer or the cartridge is rotated among a plurality of printers.

Above, a second embodiment of the present invention has been described.

Next, a third embodiment of the present invention will be described with reference to working examples in accordance with the following outline.
A. System Configuration
B. Online Provision of Control Software
C. Provision of Sample Printing Data
D. Online Provision of User Support Information
E. Variations

### A. System Configuration

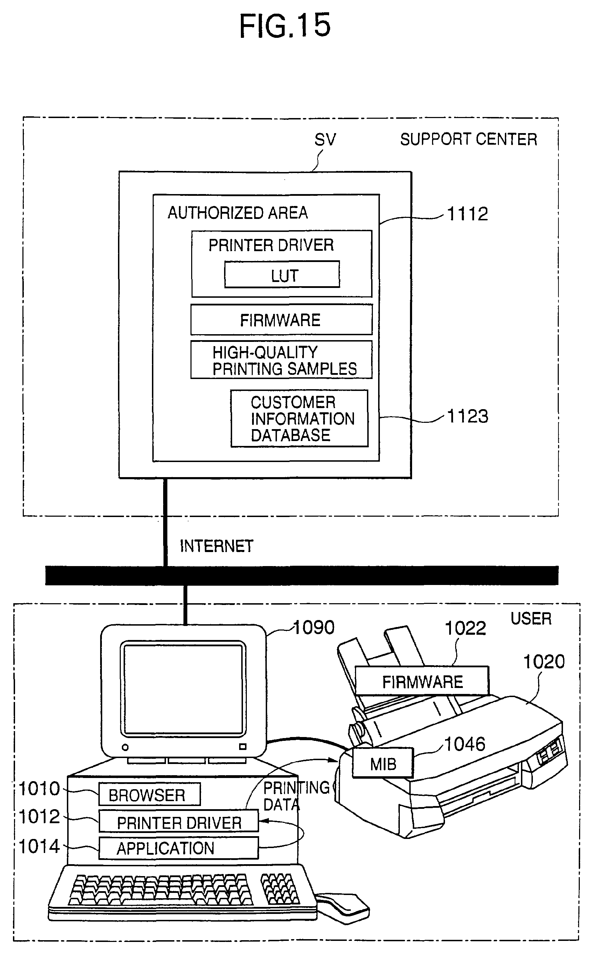

Referring now to FIG. 15, this is a drawing to assist in describing a sample configuration of a system associated with a third embodiment of the present invention wherein printer operation support is carried out in online processing fashion. The top half of the drawing shows the configuration of a server system that carries out provision of information, and the bottom half of the drawing shows a client system. While provision of information to a user at a printer 1020 may be performed by any party at all, for the sake of convenience we shall assume that the manufacturer of the printer is the party providing such support in the present working example, and we shall refer to the facility through which such support is provided as a "support center."

In the present working example, the client system comprises a configuration wherein a printer 1020 is connected to a computer 1090 by means of a parallel cable. Whereas a configuration wherein printer 1020 is connected in local fashion to computer 1090 though use of a parallel cable is indicated in the present working example, this connection may also be accomplished by way of a LAN (Local Area Network).

With continued reference to FIG. 15, installed on computer 1090 are a number of programs capable of being launched from a prescribed operating system. Here, as representative examples of such programs, a browser 1010 provided for viewing of web pages, a printer driver 1012 functioning so as to drive a printer 1020, and an application program 1014 capable of generating text and image data for printing at printer 1020 are shown. When printing is carried out, the print commands are sent from application program 1014 to printer driver 1012 along with the file to be printed. Printer driver 1012 performs rendering operations and other processing on this file to generate printing data which is supplied to printer 1020. Printer 1020 receives this printing data by way of the parallel cable and carries out printing. Furthermore, printer 1020 is equipped with printer firmware 1022 for controlling the operations thereof, and an MIB (Management Information Base) 1046, which is a database for retention of printer operational environment and status data and the like. By accessing this MIB 1046, computer 1090 can obtain the operational environment and status data of printer 1020.

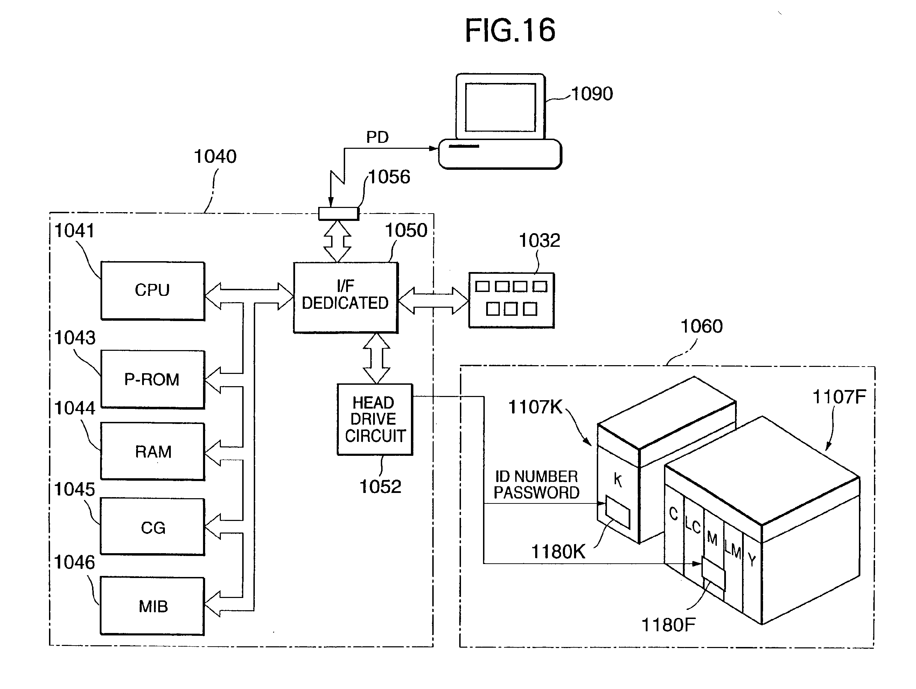

With continued reference to FIG. 15 and additional reference now to FIG. 16, FIG. 16 is a block diagram showing the configuration of a printer 1020, the central component of which is a control circuit 1040. In the present working example, control circuit 1040 comprises an arithmetic and logic circuit equipped with a CPU 1041, a reprogrammable ROM (PROM) 1043, a RAM 1044, a character generator (CG) 1045 wherein dot matrices representing characters are stored, and the aforesaid MIB 1046. This control circuit 1040 is further equipped with a dedicated interface circuit 1050 that functions as a dedicated interface for an external motor or the like, and a head drive circuit 1052 that is connected to this dedicated interface circuit 1050 and that drives a printhead 1060, causing jetting of ink therefrom. Dedicated interface circuit 1050 has a built-in parallel interface circuit and is capable of receiving printing data PD supplied thereto from computer 1090 by way of a connector 1056. Printer 1020 carries out printing in accordance with this printing data PD. Moreover, RAM 1044 functions as a buffer memory for temporary storage of raster data, and printer firmware 1022 is stored in PROM 1043. Any of various reprogrammable nonvolatile memory devices may be used as this PROM 1043, use of an EEPROM, for example, being possible.

In the present working example, printhead 1060 is such as to allow installation of ink reservoirs equipped with memories, a black ink cartridge 1107K and a color ink cartridge 1107F being installed therein as shown in FIG. 16. Black ink cartridge 1107K and color ink cartridge 1107F are respectively provided with memories 1180k, 1180F. Ink cartridge identifiers ID and a password for accessing a server SV at the support center are stored within these memories 1180k, 1180F. Furthermore, these memories 1180k, 1180F may also store information concerning the type of ink contained therein and remaining ink level.

In addition, in the present working example, color ink cartridge 1107F is such that five ink supplies for five types of ink are joined together to form a single integral unit. Instead of such an integral color ink cartridge 1107F, printhead 1060 may also be constructed such that separate ink supplies are installed in printhead 1060 for each ink type. In such a case, each separate ink reservoir may be provided with its own memory. As is plain from the foregoing description, "ink reservoir" as used in this specification refers to a receptacle containing one type of ink. Furthermore, "ink cartridge" refers to a unit wherein one or more ink supplies are formed in integral fashion.

### B. Online Provision of Control Software

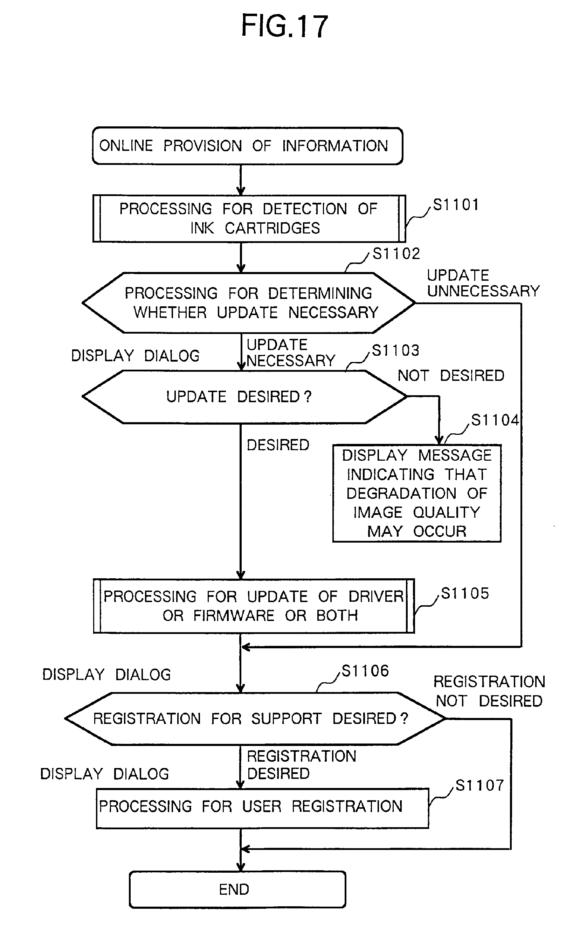

With continued reference to FIGS. 15 and 16 and with additional reference now to FIG. 17, FIG. 17 is a flowchart showing a sequence of events occurring during provision of a printer driver or printer firmware in a working example associated with a third embodiment of the present invention. At step S1101, an ink cartridge installed in printer 1020 is detected by CPU 1041 of printer 1020.

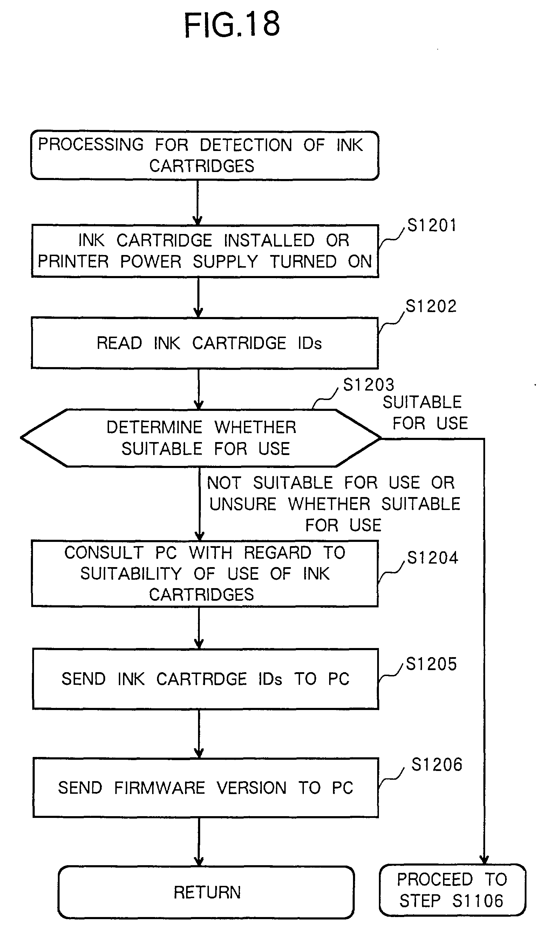

With continued reference to FIGS. 15, 16, and 17 and with additional reference now to FIG. 18, FIG. 18 is a flowchart showing step S1101 in further detail (sequence of processing for detection of ink cartridges). In the present working example, at step S1201, when an ink cartridge 1107K or 1107F is installed in printer 1020 with the printer power supply turned ON, or if the printer power supply is turned ON following installation of an ink cartridge 1107K or 1107F, then this ink cartridge 1107K or 1107F is detected by CPU 1041. That is, the act of installing an ink cartridge 1107K or 1107F or of turning ON the printer power supply triggers this sequence of steps for provision of information.

In the present working example, detection of an ink cartridge by CPU 1041 is carried out by way of dedicated interface circuit 1050 and head drive circuit 1052, as shown in FIG. 16. The functions for carrying out the process of ink cartridge detection are implemented as a result of execution of one of a number of programs stored in PROM 1043 by CPU 1041 of control circuit 1040.

With continued reference to FIG. 18 and with supplemental reference to FIGS. 15, 16, and 17, in the present working example, at step S1202, ink cartridge IDs stored in memories 1180k, 1180F of ink cartridges 1107K, 1107F are read by CPU 1041 by way of dedicated interface circuit 1050 and head drive circuit 1052. In the case of the present working example, the two IDs of ink cartridges 1107K and 1107F are read.

At step S1203, CPU 1041 determines whether ink cartridges 1107K, 1107F are appropriate for the current printing environment. Specifically, in the present working example, a list of IDs of ink cartridges suitable for use therewith is read, for example, from MIB 1046 (FIG. 16), and the IDs read from memories 1180k, 1180F are compared therewith to determine whether those IDs are contained in that list. If they are contained in that list, it is determined that these ink cartridges are suitable for use without any need to change printing environment, and processing proceeds to step S1106, described below. If they are not contained in that list, because it cannot be determined whether these ink cartridges are suitable for use therewith, processing proceeds to step S1204.

In the present working example, at step S1204, computer 1090 is consulted with regard to suitability of use of ink cartridges 1107K, 1107F of printer 1020. Upon receiving this "consultation signal," printer driver 1012 at computer 1090 requests input of ink cartridge IDs from printer 1020. At step S1205, upon receipt thereof, printer 1020 sends the ink reservoir IDs to computer 1090. Similarly at step S1206, printer firmware version information is sent to computer 1090. Furthermore, these sets of information are used at computer 1090 to carry out processing to determine whether an update is necessary (S1102 in FIG. 17).

At step S1102, computer 1090 determines whether those ink cartridges are suitable for use based on the ink cartridge IDs, the version of the printer firmware 1022, and the version of the printer driver 1012 installed at computer 1090.

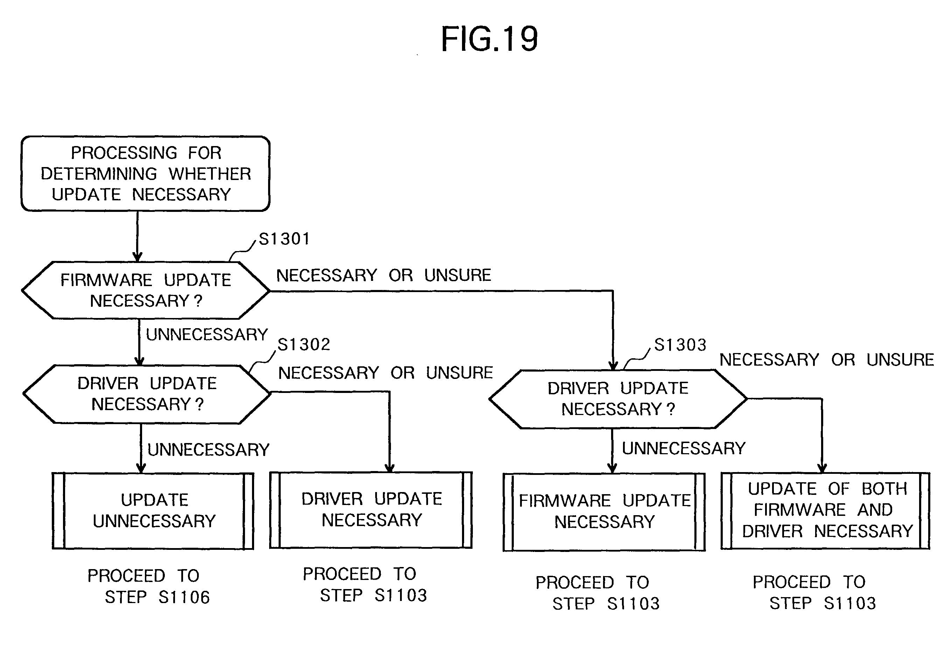

With continued reference to FIGS. 15, 16, and 17 and with additional reference now to FIG. 19, FIG. 19 is a flowchart showing step S1102 in further detail (sequence of processing for determining whether update of printer firmware or printer driver is necessary). In the present working example, at step S1301, printer driver 1012 determines whether an update of printer firmware 1022 is necessary for use of ink cartridges 1107K, 1107F. Such determination is carried out, for example, based on a reference table which is stored in the computer 1090 indicating the version of the printer firmware 1022 which is stored in printer 1020 and the ink cartridges which are appropriate therefor. Moreover, such reference table may be successively updated by means of information provided from information-providing server SV or elsewhere as new printer firmware 1022 and ink cartridges are developed. If it is determined that update of printer firmware 1022 may be necessary, then processing proceeds to step S1304; and if such update is determined to be unnecessary, then processing proceeds to step S1302.

With continued reference to FIG. 19 and with supplemental reference to FIGS. 15, 16, and 17, in the present working example, at step S1302, printer driver 1012 determines whether an update of printer driver 1012 itself is necessary for use of ink cartridges 1107K, 1107F. Here too, such determination may be carried out based on a prescribed compatibility table similar to that mentioned with reference to step S1301. If it is determined that update of printer driver 1012 may be necessary, then processing proceeds to step S1303; and if such update is determined to be unnecessary, then processing proceeds to step S1103.

If it is determined that update of printer firmware 1022 may be necessary at step S1301, then processing proceeds to step S1303, at which processing for a similar determination with respect to printer driver 1012 is carried out in similar fashion to that described above. Determination is also carried out to see whether update of only printer firmware 1022 is necessary or whether update of both printer firmware 1022 and printer driver 1012 is necessary, following which this processing to determine whether update is necessary terminates.

If as a result of processing to determine whether update is necessary it is found that update is unnecessary, then processing proceeds to step S1106 (FIG. 17); and if update is found to be necessary, then processing proceeds to step S1103 (FIG. 17). At step S1103, a dialog-type screen is displayed at computer 1090, and the user is asked whether the update is to be carried out.

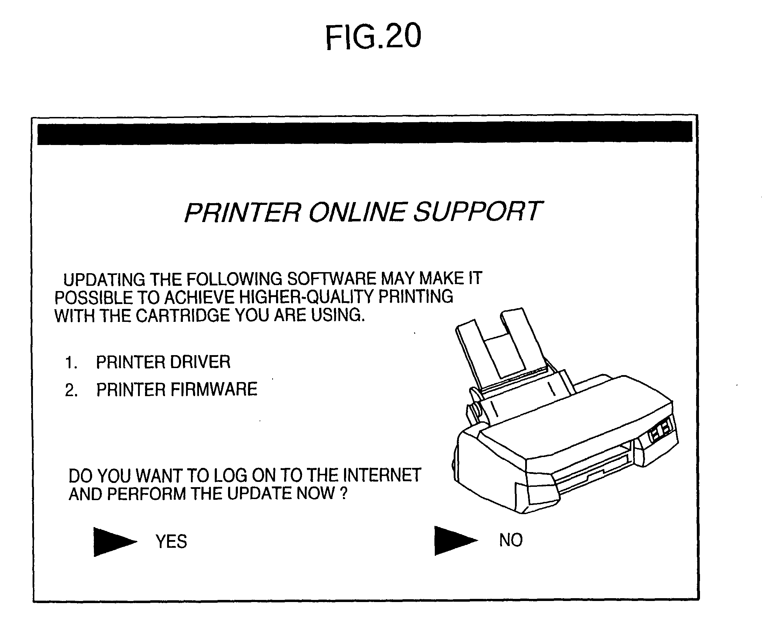

With reference now to FIG. 20 and with supplemental reference to FIGS. 15, 16, and 17, FIG. 20 is an illustrative drawing showing an example of a dialog box by means of which it is possible to query whether updating of a printer driver or the like is to be carried out. Selecting "No" at this dialog box causes processing to proceed to step S1104, at which a message is displayed indicating that failure to perform the update may result in degradation of image quality. While such displayed message is not shown in the drawings, if the user selects "GO BACK" at a location on the display provided for such purpose, the message in FIG. 20 is redisplayed, giving the user another opportunity to indicate that the user wants to update printer driver 1012 or printer firmware 1022 or both, as the case may be. Alternatively, if the user selects "Yes" at the dialog box of FIG. 20, processing proceeds to step S1105. At step S1105, computer 1090 uses information read from memories 1180k, 1180F provided at ink cartridges 1107K, 1107F to automatically access information-providing server SV, and information-providing server SV, after confirming that update is necessary, automatically updates the software for which update is required (e.g., printer driver 1012). Moreover, such update of software need not be carried out with respect to the entire printer driver 1012 or other such control software, but may instead be directed to a portion thereof (e.g., a color conversion table of printer driver 1012).

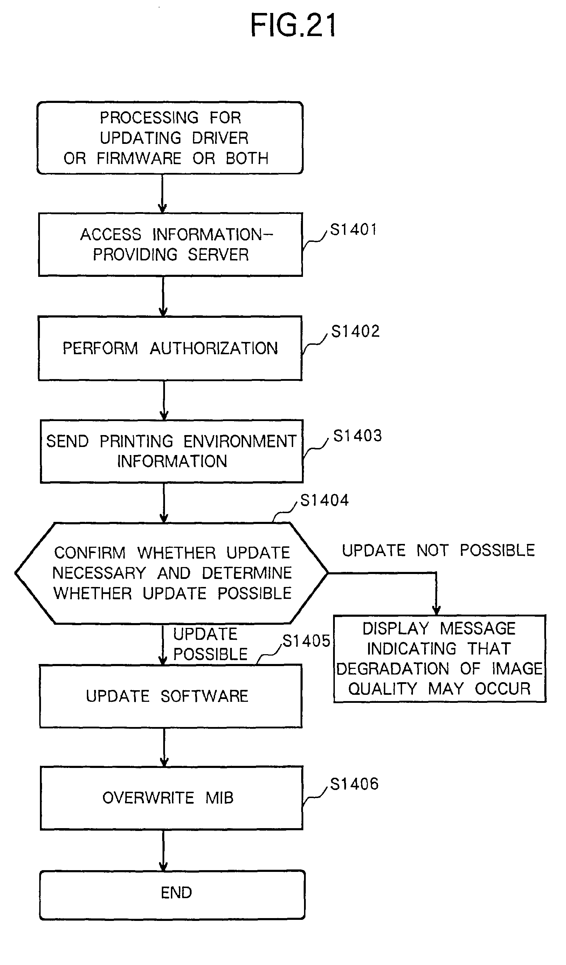

With continued reference to FIGS. 15, 16, and 17 and with additional reference now to FIG. 21, FIG. 21 is a flowchart showing step S1105 in further detail (sequence of processing for updating driver or firmware or both). In the present working example, at step S1401, computer 1090 accesses a prescribed web page existing at information-providing server SV. Such access is carried out using information stored in memories 1180k, 1180F provided at ink cartridges 1107K, 1107F. Specifically, when processing for updating driver or firmware or both begins, browser 1010 installed at computer 1090 is automatically launched. A URL read from memories 1180k, 1180F is then used to access an Internet web page existing at information-providing server SV. As a result, the user is freed from the burden of having to search for a web page for receipt of the information to be provided. Moreover, this web page may be a page that is freely available to the general public.

With continued reference to FIG. 21 and with supplemental reference to FIGS. 15, 16, and 17, in the present working example, at step S1402, authorization is carried out. Such authorization is carried out by information-providing server SV based on ink cartridge IDs and passwords stored in memories 1180k, 1180F. That is, computer 1090 reads such data from memories 1180k, 1180F and sends same to information-providing server SV. Information-providing server SV decides which of its pages it will allow access to based on the data so sent. This makes it possible to limit provision of information only to users possessing ink cartridges.

At step S1403, computer 1090 sends printing environment information to information-providing server SV. This printing environment includes the amount of PROM memory available, the version of printer firmware 1022, the amount of available memory, the version of printer driver 1012, and the operating system used at computer 1090, and other information regarding resources used to execute printing. Moreover, printing environment information for the printer is sent to information-providing server SV after computer 1090 reads such information from MIB 1046 of printer 1020, a registry within computer 1090, and the like.

With continued reference to FIG. 21 and with supplemental reference to FIGS. 15, 16, and 17, in the present working example, at step S1404, based on such received information, information-providing server SV determines whether update of printing environment software (printer driver 1012 and printer firmware 1022) is necessary and whether such update is possible. This confirmation of whether an update is necessary assumes that it is possible for high-quality printing to be carried out with the currently installed printer driver 1012 and printer firmware 1022 even when, for example, an ink cartridge developed subsequent to shipment of the printer 1020 is used. That is, in such a case, it may be that the ink cartridge ID is not registered with either printer driver 1012 or MIB 1046 of printer 1020, but this is so because update of the aforesaid printing environment software is unnecessary.

Determination of whether update of printing environment software is necessary is is made based on a list of ink cartridge IDs and the versions of printer driver 1012 and printer firmware 1022 which are compatible therewith. This list is present at information-providing server SV and is successively updated as new ink cartridges and printer drivers 1012 are developed. If it is determined that update of printer driver 1012 and so forth is unnecessary, then a message to this effect is sent to computer 1090, and moreover, this list is downloaded thereto, and the list present at printer driver 1012 and the list present at MIB 1046 of printer 1020 are automatically updated.

Determination of whether update of printing environment software is possible is carried out because of occurrence, for example, of situations where the printer driver 1012 that would be newly installed as a result of update would not be compatible with the operating system in use at computer 1090, or the capacity of the PROM provided at printer 1020 is insufficient for the new printer firmware 1022, or the like. This determination of whether update is possible is carried out based on the software requiring update (e.g., printer driver 1012 only) and the printing environment information received from computer 1090. If it is determined that update cannot be carried out, a message is displayed indicating that image quality may suffer degradation; but if it is determined that update can be carried out, processing proceeds to step S1405 and update of printing environment software begins.

With continued reference to FIG. 21 and with supplemental reference to FIGS. 15, 16, and 17, in the present working example, at step S1405, processing is performed for update of software requiring update. Update of printer firmware 1022 is an operation involving PROM 1043 (FIG. 16) of printer 1020, and update of printer driver 1012 is an operation involving the hard disk of computer 1090. If the update ends normally, a message indicating such fact is sent from computer 1090 to information-providing server SV, and processing proceeds to step S1406.

At step S1406, the version of software as updated is recorded at MIB 1046, processing for update of printer driver or firmware or both (step S1105) terminates, and processing proceeds to step S1106 in FIG. 17. At step S1106, a dialog box is displayed in order to ask whether user support is desired.

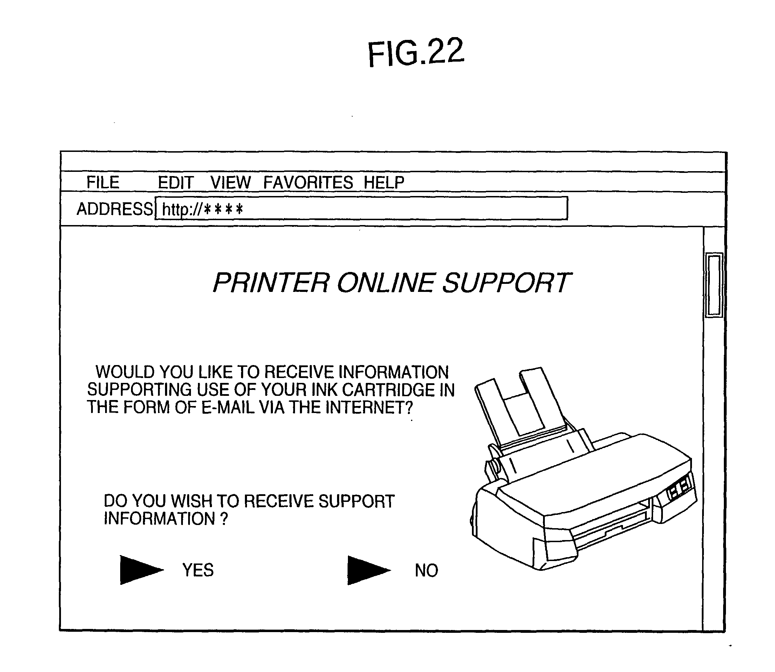

With continued reference to FIGS. 15, 16, and 17 and with additional reference now to FIG. 22, FIG. 22 is an illustrative drawing showing an example of a dialog box by means of which it is possible to conduct a query with regard to user support. This dialog box may be displayed anytime that a new cartridge is installed. If the user selects "No," then a user support icon, described below, is created and placed on the desktop, and this dialog box terminates. Alternatively, if the user selects "Yes," then processing proceeds to step S1107, at which a user registration form is displayed.

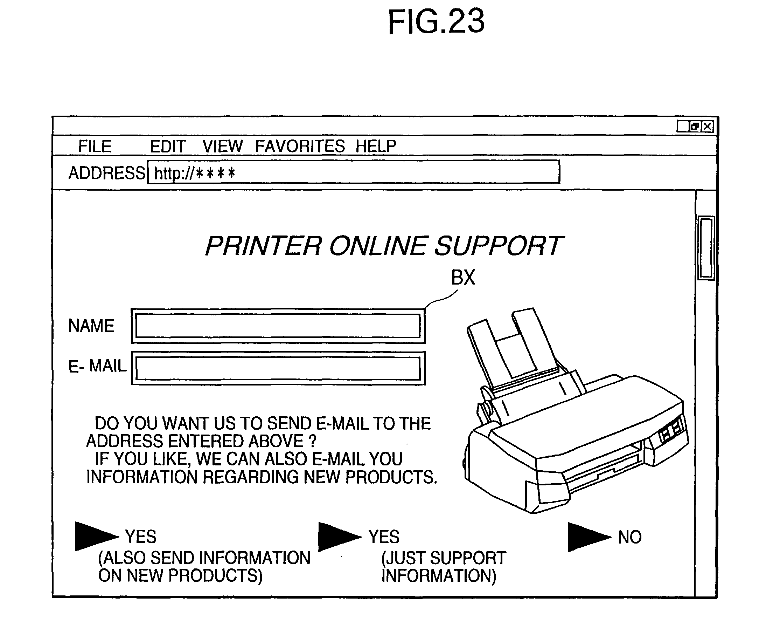

With continued reference to FIGS. 15, 16, and 17 and with additional reference now to FIG. 23, FIG. 23 is a drawing showing an example of a user registration form. Here, the user is urged to enter personal information necessary for user support. In this drawing, entry of name and electronic mail address is suggested. If the user selects "Yes (also send information on new products)" from this form, then this fact will be registered with information-providing server SV, and the user will receive not only user support information but also information regarding new products via electronic mail. Alternatively, if the user selects "Yes (just support information)," then the user will receive only user support information via electronic mail. However, if the user selects "No," then processing is cancelled. Furthermore, whereas in the present example the medium through which the information is provided is electronic mail, the form which is displayed to the user may also be such as to allow selection of facsimile or direct mail.

In the present working example, the information which is input is sent along with the ink cartridge IDs to information-providing server SV, where it is registered. In order to facilitate launching of the user support process, computer 1090 may create a user support icon which it displays at its desktop. Moreover, here, computer 1090 may at the same time send printing environment information to information-providing server SV so as to allow it to be registered at information-providing server SV.

Such a user support icon (not shown) may be employed when the user seeks user support. This icon may be such that clicking thereon causes display of a website for information-providing server SV, an electronic mail address, a telephone number, or the like which is read from memories 1180k, 1180F, or may be such that pressing a prescribed button causes Internet dialup, electronic mail transmission, or access of information-providing server SV to be carried out automatically.

As described above, when using a new ink cartridge to carry out printing, even if update of the printing environment software is necessary, the sequence of processing shown in FIG. 17 makes it possible for the appropriate printing environment software to be automatically updated simply as a result of indication by the user that update is desired at a prescribed dialog box. As a result, there is no longer a need for the user to carry out a procedure wherein the user must identify the printing environment software for which update is required, search the printing environment software requiring update in the, and install it himself, greatly reducing the burden on the user.

### C. Provision of Sample Printing Data

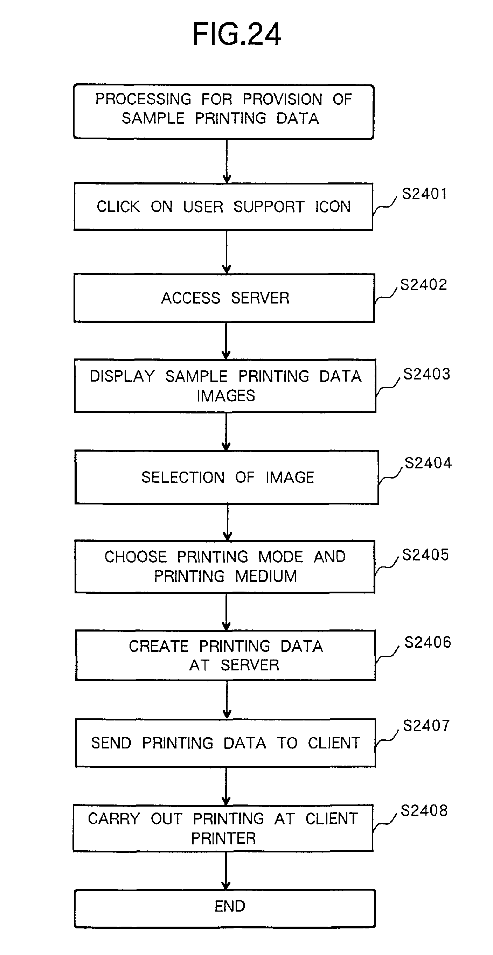

With continued reference to FIGS. 15 and 16, and with additional reference now to FIG. 24, FIG. 24 is a flowchart showing a sequence of events occurring during provision of sample printing data in a working example associated with a third embodiment of the present invention. Such provision may be carried out as one of a number of services provided to a user of an ink cartridge, and its purpose is to provide high-quality printing data which is suitable for the ink cartridge being used. Provision of such a service may be in recognition of the fact that it is difficult for the typical user to create or otherwise obtain high-quality image data. Below, a sequence by which this may be accomplished is described with reference to the flowchart.

With continued reference to FIG. 24 and with supplemental reference to FIGS. 15 and 16, in the present working example, at step S2401, a user clicks on a user support icon. Upon so clicking, a user support page having a button for provision of sample printing data is displayed (not shown). Clicking on this button for provision of sample printing data causes processing for provision of sample printing data to begin. At step S2402, browser 1010 is automatically launched at computer 1090, and computer 1090 accesses information-providing server SV using a URL read from memory 1180k or 1180F provided at ink cartridge 1107K or 1107F. Computer 1090 then sends a password which it reads from the same memory in response to prompting for same by information-providing server SV. Following password confirmation, information-providing server SV grants permission for computer 1090 to access a web page for provision of sample printing data. Computer 1090 sends printer firmware 1022 version information and other such printing environment information to information-providing server SV.

In addition, the web page for provision of sample printing data may be varied in correspondence to cartridge ID. Doing so will permit provision of more precisely targeted service. For example, processing may be such as to cause a web page containing images of people to be automatically accessed when the ID of an ink cartridge suited to printing of people is received, or a web page containing images of scenery to be automatically accessed when the ID of an ink cartridge suited to printing of such images is received.

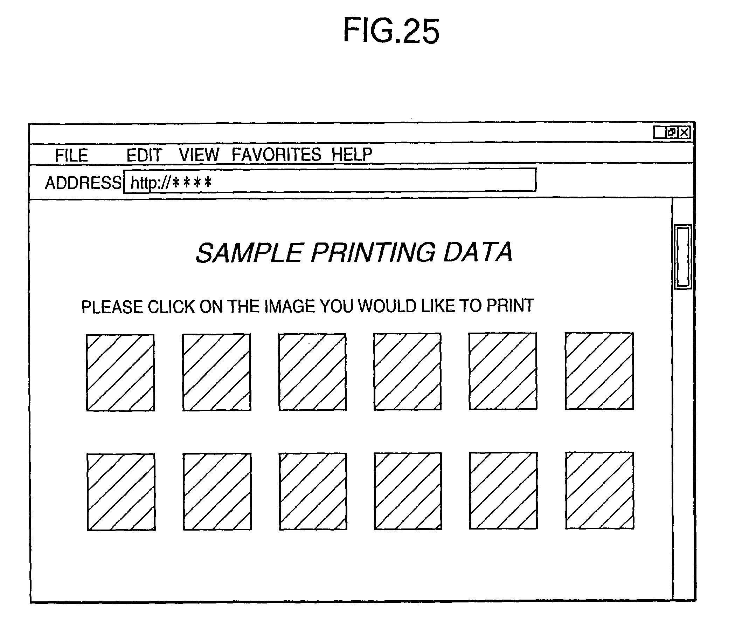

With continued reference to FIGS. 15,16, and 24 and with additional reference now to FIG. 25, FIG. 25 is an illustrative drawing showing an example of a page displaying a series of images capable of being printed using sample printing data. In the present working example, at step S2403, a series of images capable of being printed using sample printing data is displayed. Such display may be in the form of thumbnail images. A thumbnail image is a reduced-size image provided for the purpose of selection of data. At step 2404, the user selects a thumbnail image that he wants to print. When one of the images is selected, a set of printer properties and a printing medium appropriate based upon consideration of the selected image and previously received printing environment information are displayed. Setting buttons and confirmation buttons for printer properties mode and printing medium are also displayed at this time.

At step S2405, at that page, the user chooses the printing mode and printing medium which are desired, and selects an OK button. Selecting the OK button causes a printer driver at information-providing server SV to begin processing based on the printing mode and medium chosen. Moreover, at this time, computer 1090 functions as a terminal.

At step S2406, the printer driver at information-providing server SV creates printing data for printing at printer 1020, which it stores at information-providing server SV.

At step 2407, printing data created and stored during the preceding step is sent from information-providing server SV to computer 1090. At step 2408, the printing data which is so sent is received by computer 1090 and is supplied without further modification to printer 1020. Printer 1020 processes same printing data by means of printer firmware 1022, and carries out printing.

As described above, because the sequence of processing shown in FIG. 24 is such that sample printing data suited to an ink cartridge used at a printer 1020 is supplied to a client system, it is possible to create an attractive printed sample in correspondence to the type of ink which is actually being used.

### D. Online Provision of User Support Information

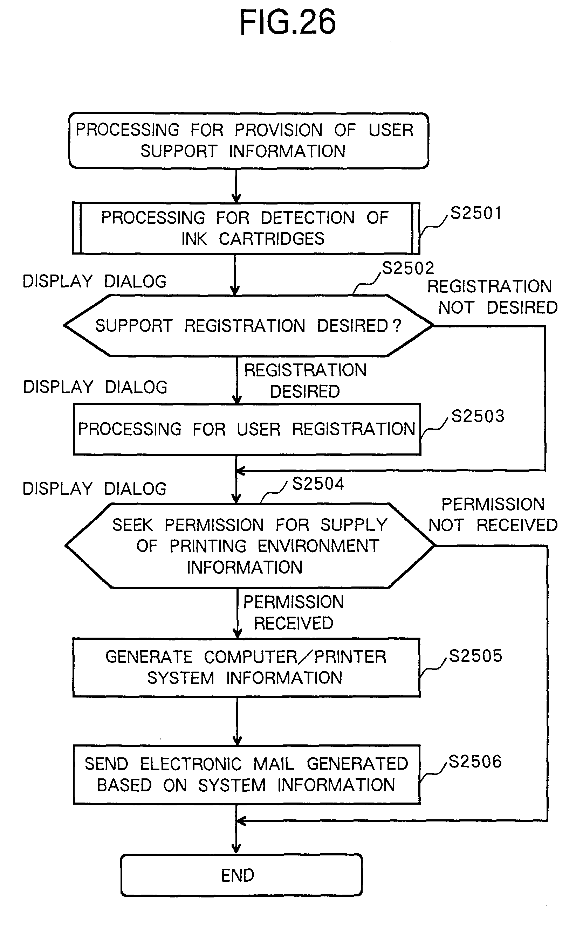

With continued reference to FIGS. 15 and 16, and with additional reference now to FIG. 26, FIG. 26 is a flowchart showing a sequence of events occurring when user support information is provided in another working example associated with a third embodiment of the present invention. In the present working example, at step S2501, processing for detection of ink cartridges is carried out at and a sequence for provision of user support information is initiated. Processing for detection of ink cartridges is identical to that carried out at step S1101 described with reference to FIG. 17. At step S2502, the user is asked whether user support is desired, and at step S2503 a user registration form is displayed. Steps S2502 and S2503 are respectively identical to steps S1106 and S1107 described with reference to FIG. 17.

With continued reference to FIG. 26 and with supplemental reference to FIGS. 15 and 16, in the present working example, at step S2504, the user is asked whether the user will grant permission for supply of computer/printer system information to information-providing server SV. Computer/printer system information includes ink cartridge IDs, the operating system at computer 1090, computer 1090 and printer 1020 model numbers, printer driver 1012 and printer firmware 1022 version numbers, and other information indicative of the printing environment at computer 1090 and printer 1020. Computer/printer system information may be considered to fall under the category of private information of the user. That is why the agreement of the user is sought here.

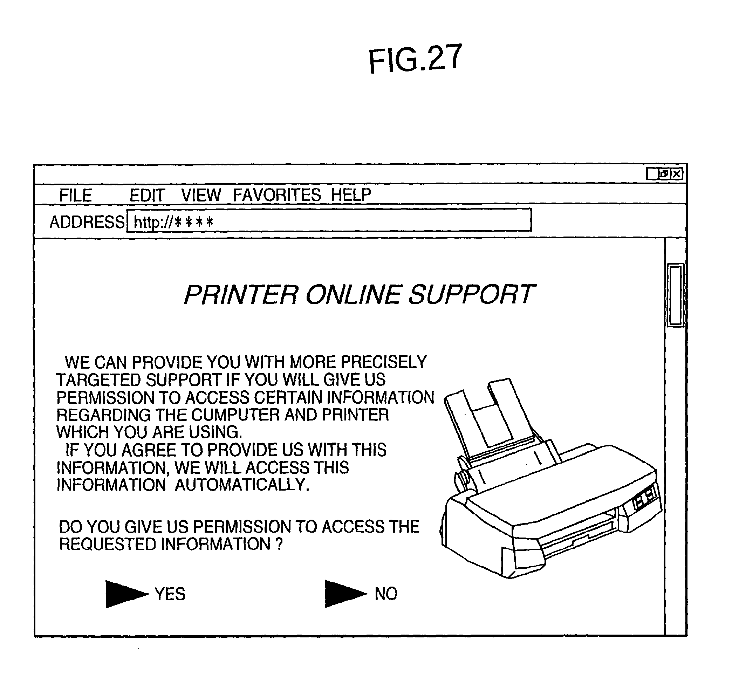

With continued reference to FIGS. 15,16, and 26 and with additional reference now to FIG. 27, FIG. 27 is an illustrative drawing showing an example of a dialog box by means of which it is possible to carry out user support registration. If the user selects "No" at this dialog box, then processing terminates; if the user selects "Yes," then processing proceeds to step S2505.

At step S2505, computer 1090 sends computer/printer system information to information-providing server SV. This causes this processing for provision of user support information to begin. Moreover, in addition to such information, printer driver 1012 may extract information regarding the names and versions of other applications installed thereat as well as various settings pertaining thereto from the registry database and send this to information-providing server SV.

At step S2506, information-providing server SV generates user support information appropriate for that computer 1090 and printer 1020 based on the computer/printer system information which it receives. This makes it possible to provide the user with information suited to the user's situation. At step S2506, while user support information and information regarding new products is provided via electronic mail in the present working example, the method by which such information is provided is not limited to electronic mail, as this may also be performed via facsimile or direct mail in correspondence to the wish of the user.

As described above, because the sequence shown in FIG. 26 makes it possible for user support information to be created based on computer/printer system information and provided to a user, appropriate information can be provided to the user.

### E. Variations

Moreover, the present invention is not limited to the embodiments and working examples described above but may be carried out in the context of a wide variety of modes other than those specifically presented herein without departing from the spirit of the invention; for example, variations such as the following are possible.

The present invention may be applied not only to color printing but also to monochromatic printing. Furthermore, the present invention may be applied in situations where a single pixel is represented by a plurality of dots in order to carry out printing exhibiting multiple gradations. Furthermore, the present invention may be applied to drum-type printers. Note that with drum-type printers, the direction of rotation of the drum represents the scan direction, and the direction of travel of the carriage represents the cross-scan direction. Furthermore, the present invention is not limited to inkjet printers, but may be applied in general to any type recording apparatus that employs a recording head possessing nozzles to carry out printing on a printing medium surface.

Some of the constitutional elements implemented in hardware in the foregoing working examples associated with a third embodiment of the present invention may be replaced with equivalent software, and conversely, some of the constitutional elements implemented in software therein may be replaced with equivalent hardware. For example, some or all of the functions of printer driver 1012 indicated in FIG. 15 may be performed by control circuit 1040 of printer 1020. In such a case, some or all of the functions by which computer 1090 serves as a printing control apparatus in generating printing data may be accomplished by control circuit 1040 of printer 1020.

To the extent that some or all of the functions of the present invention may be accomplished through software, such software (computer programs) may be provided in a form such that the software is stored in a computer-readable recording medium. In the present invention, the term "computer-readable recording medium" is not limited to portable recording media such as flexible disks and CD-ROMs, but also includes the various types of RAMs, ROMs, and other such internal storage devices found in computers, as well as hard disks and other such external storage devices which may be permanently or semi-permanently attached to a computer.

## Claims

1. An image-forming system employing an image-forming apparatus having a removable cartridge possessing a memory element, comprising:
a reading component for reading information from the memory element; and
an executing component for executing processing for providing a benefit to a user based on information read by the reading component.

2. An image-forming system according to claim 1 wherein
the information which is read is user support information for supporting use of the image-forming apparatus or a URL of a site on a communications network possessing the user support information; and
the executing component executes processing for supporting the user based on the user support information or the URL.

3. A method for providing a benefit comprising:
a reading step wherein information is read from a memory element attached to a cartridge used by an image-forming apparatus;
a processing step wherein processing for providing a benefit to a user is executed based on the information read at the reading step; and
a benefit providing step wherein a benefit is provided to the user based on the results of the processing executed at the processing step.

4. A method for providing a benefit according to claim 3 wherein
the information read at the reading step is user support information for supporting use of the image-forming apparatus or a URL of a site on a communications network possessing the user support information; and
processing for supporting the user is executed at the processing step based on the user support information or the URL.

5. An image-forming system employing a host apparatus and an image-forming apparatus which are mutually connected, comprising:
a replaceable cartridge possessing a memory element being installed in the image-forming apparatus, and lottery determination data for determining whether something has been won being stored in the memory element;
a reading component for reading the lottery determination data from the memory element;
a lottery determination component that uses lottery determination data read by the reading component to determine whether something has been won; and
a prize awarding component that performs processing for awarding a prize to a user in correspondence to the results of a determination carried out by the lottery determination component when the results of such determination indicate that something has been won.

6. An image-forming system according to claim 5 wherein the prize awarding component records data indicating that something has been won in the memory element of the cartridge when the results of a determination carried out by the lottery determination component indicate that something has been won, as a result of which the user is made able to receive the prize upon exchange of the cartridge therefor.

7. An image-forming system according to claim 5 wherein the prize awarding component provides the user with information indicating that something has been won when the results of a determination carried out by the lottery determination component indicate that something has been won, as a result of which the user is made able to receive the prize by notifying a prescribed organization of the information indicating that something has been won.

8. An image-forming system according to claim 5 wherein prize data, being the prize itself or data for obtaining the prize from a prescribed prize awarding organization, is stored in the memory element, and
the prize awarding component reads the prize data from the memory element when the results of a determination carried out by the lottery determination component indicate that something has been won, and uses the prize data to award the prize to the user.

9. An image-forming system according to claim 5 wherein the lottery determination data is win-or-lose data that indicates directly whether something has been won, and
the lottery determination component determines directly from the win-or-lose data whether something has been won.

10. An image-forming system according to claim 5 wherein the lottery determination data is encoded lottery data, and
the lottery determination component determines whether something has been won by performing prescribed processing on the encoded lottery data.

11. An image-forming system employing a host apparatus and an image-forming apparatus which are mutually connected, comprising:
a replaceable cartridge possessing a memory element being installed in the image-forming apparatus, and prize data, being a prize itself or data for obtaining a prize from a prescribed prize awarding organization , being stored in the memory element;
a component that determines whether something has been won in connection with use of the image-forming apparatus or the host apparatus, and reads the prize data from the memory element and uses the prize data to award a prize to a user when the results of that determination indicate that something has been won.

12. An image-forming system according to claim 11 wherein the prize data comprises at least one species selected from among the group consisting of image data serving as a prize itself, image-forming apparatus driver information serving as a prize itself, a keyword or password which must be supplied to a prescribed prize awarding organization in order obtain a prize, and a URL of a network site which awards a prize.

13. An image-forming system employing a host apparatus and an image-forming apparatus which are mutually connected, comprising:
a replaceable cartridge possessing a memory element being installed in the image-forming apparatus, and usage data indicating an amount of use to date of the image-forming apparatus or the cartridge being stored in the memory element;
a reading component that reads the usage data from the memory element; and
a prize awarding component that performs processing for awarding a prize to a user in correspondence to the usage data read by the reading component.

14. An image-forming system according to claim 13 further comprising a component for preventing repeated awarding of prizes based on the same usage data.

15. An image-forming system employing a host apparatus and an image-forming apparatus which are mutually connected, comprising;
a replaceable cartridge possessing a memory element being installed in the image-forming apparatus, and data which comprises at least one species selected from among the group consisting of a URL of a network site which awards a prize, a keyword or password which must be supplied to a prescribed prize awarding organization in order obtain a prize, image-forming apparatus driver information serving as a prize itself, and image data serving as a prize itself in consideration for use of the cartridge being stored in the cartridge memory element;
a reading component that reads the data from the cartridge memory element; and
a prize awarding component that uses data read by the reading component to perform processing for awarding a prize to a user.

16. An image-forming system according to claim 5, 11, or 15 further comprising a component for performing processing to prevent repeated awarding of prizes in connection with the same cartridge.

17. An image-forming apparatus in an image-forming system wherein a host apparatus and the image-forming apparatus are mutually connected, comprising;
a replaceable cartridge possessing a memory element storeing lottery determination data for determining whether something has been; and
a reading component for reading the lottery determination data from the memory element, as a result of which the image-forming apparatus makes it possible for the image-forming system to use lottery determination data read by the reading component to determine whether something has been won and perform processing for awarding a prize to a user in correspondence to the results of that determination when those results indicate that something has been won.

18. An image-forming apparatus in an image-forming system wherein a host apparatus and the image-forming apparatus are mutually connected, comprising:
a replaceable cartridge possessing a memory element storeing prize data, being a prize itself or data for obtaining a prize from a prescribed prize awarding organization; and
a reading component for reading the prize data from the memory element, as a result of which the image-forming apparatus makes it possible for the image-forming system to determine whether something has been won in connection with use of the image-forming apparatus or the host apparatus and use the prize data to perform processing for awarding a prize to a user when the results of that determination indicate that something has been won.

19. An image-forming apparatus in an image-forming system wherein a host apparatus and the image-forming apparatus are mutually connected, comprising:
a replaceable cartridge possessing a memory element storeing usage data indicating an amount of use to date of the image-forming apparatus or the cartridge; and
a reading component for reading the usage data from the memory element, as a result of which the image-forming apparatus makes it possible for the image-forming system to perform processing for awarding a prize to a user in correspondence to the usage data read by the reading component.

20. An image-forming apparatus in an image-forming system wherein a host apparatus and the image-forming apparatus are mutually connected, comprising:
a replaceable cartridge possessing a memory element storeing data which comprises at least one species selected from among the group consisting of a URL of a network site which awards a prize, a keyword or password which must be supplied to a prescribed prize awarding organization in order obtain a prize, image-forming apparatus driver information serving as a prize itself, and image data serving as a prize itself in consideration for use of the cartridge being stored in the memory element; and
a reading component for reading the data from the memory element, as a result of which the image-forming apparatus makes it possible for the image-forming system to use the data so read by the reading component to perform processing for awarding a prize to a user.

21. A host apparatus in an image-forming system wherein an image-forming apparatus and the host apparatus are mutually connected, a replaceable cartridge possessing a memory element being installed in the image-forming apparatus, and lottery determination data for determining whether something has been won being stored in the memory element, the host apparatus comprising:
a prize awarding component that receives the results of a determination of whether something has been won which is performed by the image-forming system based on lottery determination data within the memory element, and that performs processing for awarding a prize to a user in correspondence to the results of this determination when those results indicate that something has been won.

22. A host apparatus in an image-forming system wherein an image-forming apparatus and the host apparatus are mutually connected, a replaceable cartridge possessing a memory element being installed in the image-forming apparatus, and prize data, being a prize itself or data for obtaining a prize from a prescribed prize awarding organization, being stored in the memory element, the image-forming system performing a determination of whether something has been won in connection with use of the image-forming apparatus or the host apparatus, the host apparatus comprising:
a prize awarding component that receives the results of the determination of whether something has been won from the image-forming system and uses prize data read from the memory element by the image-forming apparatus to perform processing for awarding a prize to a user when the results of that determination indicate that something has been won.

23. A host apparatus in an image-forming system wherein an image-forming apparatus and the host apparatus are mutually connected, a replaceable cartridge possessing a memory element being installed in the image-forming apparatus, and usage data indicating an amount of use to date of the image-forming apparatus or the cartridge being stored in the memory element, the host apparatus comprising:
a prize awarding component that performs processing for awarding a prize to a user in correspondence to usage data read from the cartridge memory element by the image-forming apparatus.

24. A host apparatus in an image-forming system wherein an image-forming apparatus and the host apparatus are mutually connected, a replaceable cartridge possessing a memory element being installed in the image-forming apparatus, and data which comprises at least one species selected from among the group consisting of a URL of a network site which awards a prize, a keyword or password which must be supplied to a prescribed prize awarding organization in order obtain a prize, image-forming apparatus driver information serving as a prize itself, and image data serving as a prize itself in consideration for use of the cartridge being stored in the cartridge memory element, the host apparatus comprising:
a prize awarding component that uses data read from the memory element by the image-forming apparatus to perform processing for awarding a prize to a user.

25. A cartridge capable of being replaceably installed in an image-forming apparatus in an image-forming system wherein a host apparatus and the image-forming apparatus are mutually connected, comprising:
a memory element in which lottery determination data for determining whether something has been won is stored;
as a result of which the cartridge makes it possible for the image-forming system to read the lottery determination data from the memory element, use the lottery determination data so read to determine whether something has been won, and perform processing for awarding a prize to a user in correspondence to the results of that determination when those results indicate that something has been won.

26. A cartridge capable of being replaceably installed in an image-forming apparatus in an image-forming system wherein a host apparatus and the image-forming apparatus are mutually connected, comprising:
a memory element in which prize data, being a prize itself or data for obtaining the prize from a prescribed prize awarding organization external to the image-forming system, is stored;
as a result of which the cartridge makes it possible for the image-forming system to determine whether something has been won in connection with use of the image-forming apparatus or the host apparatus, and to read the prize data and use that prize data to perform processing for awarding a prize to a user when the results of that determination indicate that something has been won.

27. A cartridge capable of being replaceably installed in an image-forming apparatus in an image-forming system wherein a host apparatus and the image-forming apparatus are mutually connected, comprising:
a memory element in which usage data indicating an amount of use to date of the image-forming apparatus or the cartridge is stored;
as a result of which the cartridge makes it possible for the image-forming system to read the usage data from the cartridge memory element and perform processing for awarding a prize to a user in correspondence to the usage data so read.

28. A cartridge capable of being replaceably installed in an image-forming apparatus in an image-forming system wherein a host apparatus and the image-forming apparatus are mutually connected, comprising:
a memory element in which data which comprises at least one species selected from among the group consisting of a URL of a network site which awards a prize, a keyword or password which must be supplied to a prescribed prize awarding organization in order obtain a prize, image-forming apparatus driver information serving as a prize itself, and image data serving as a prize itself in consideration for use of the cartridge is stored;
as a result of which the cartridge makes it possible for the image-forming system to read the data from the cartridge memory element and to use the data so read to perform processing for awarding a prize to a user.

29. A method for providing a benefit to a user, by employing a cartridge capable of being replaceably installed in an image-forming apparatus, lottery determination data for determining whether something has been won being stored in a memory element of the cartridge, the method comprising:
a reading step wherein the lottery determination data is read from the memory element;
a lottery determination step wherein lottery determination data read at the reading step is used to determine whether something has been won; and
a prize awarding step wherein processing for awarding a prize to a user is performed in correspondence to the results of a determination carried out at the lottery determination step when the results of such determination indicate that something has been won.

30. A method for providing a benefit to a user, by employing a cartridge capable of being replaceably installed in an image-forming apparatus in an image-forming system wherein a host apparatus and the image-forming apparatus are mutually connected, and wherein prize data, being a prize itself or data for obtaining a prize from a prescribed prize awarding organization, is stored in a memory element of the cartridge, the method comprising
a lottery determination step wherein a determination of whether something has been won in connection with use of the image-forming apparatus or the host apparatus is performed;
a prize data reading step wherein the prize data is read when the results of a determination carried out at the lottery determination step indicate that something has been won; and
a prize awarding step wherein the prize data read at the prize data reading step is used to perform processing for awarding a prize to a user when the results of a determination carried out at the lottery determination step indicate that something has been won.

31. A method for providing a benefit to a user, by employing a cartridge capable of being replaceably installed in an image-forming apparatus, usage data indicating an amount of use to date of the image-forming apparatus or the cartridge being stored in a memory element of the cartridge, the method comprising:
a reading step wherein the usage data is read from the memory element; and
a prize awarding step wherein processing for awarding a prize to a user is performed in correspondence to the usage data read at the reading step.

32. A method for providing a benefit to a user, by employing a cartridge capable of being replaceably installed in an image-forming apparatus in an image-forming system wherein a host apparatus and the image-forming apparatus are mutually connected, and wherein data which comprises at least one species selected from among the group consisting of a URL of a network site which awards a prize, a keyword or password which must be supplied to a prescribed prize awarding organization, image-forming apparatus driver information serving as a prize itself, and image data serving as a prize itself in consideration for use of the cartridge being stored in a memory element of the cartridge, the method comprising:
a reading step wherein the data is read from the memory element; and
a prize awarding step wherein the data read at the reading step is used to perform processing for awarding a prize to a user.

33. A computer program for a host apparatus in an image-forming system wherein an image-forming apparatus and the host apparatus are mutually connected, a replaceable cartridge possessing a memory element being installed in the image-forming apparatus, and lottery determination data for determining whether something has been won being stored in the memory element, the computer program comprising:
program codes for causing the host apparatus to execute processing for receiving the results of a determination of whether something has been won which is performed by the image-forming system based on lottery determination data within the cartridge memory element, and for awarding a prize to a user in correspondence to the results of this determination when those results indicate that something has been won.

34. A computer program for a host apparatus in an image-forming system wherein an image-forming apparatus and the host apparatus are mutually connected, a replaceable cartridge possessing a memory element being installed in the image-forming apparatus, and prize data, being a prize itself or data for obtaining a prize from a prescribed prize awarding organization, being stored in the cartridge memory element, the image-forming system performing a determination of whether something has been won in connection with use of the image-forming apparatus or the host apparatus, the computer program comprising:
program codes for causing the host apparatus to execute processing for receiving the results of the determination of whether something has been won from the image-forming system and for using prize data read from the memory element by the image-forming apparatus to award a prize to a user when the results of that determination indicate that something has been won.

35. A computer program for a host apparatus in an image-forming system wherein an image-forming apparatus and the host apparatus are mutually connected, a replaceable cartridge possessing a memory element being installed in the image-forming apparatus, usage data indicating an amount of use to date of the image-forming apparatus or the cartridge being stored in that cartridge memory element, the computer program comprising:
program codes for causing the host apparatus to execute processing for awarding a prize to a user in correspondence to usage data read from the cartridge memory element by the image-forming apparatus.

36. A computer program for a host apparatus in an image-forming system wherein an image-forming apparatus and the host apparatus are mutually connected, a replaceable cartridge possessing a memory element being installed in the image-forming apparatus, data which comprises at least one species selected from among the group consisting of a URL of a network site which awards a prize, a keyword or password which must be supplied to a prescribed prize awarding organization, image-forming apparatus driver information serving as a prize itself, and image data serving as a prize itself in consideration for use of the cartridge being stored in the cartridge memory element, the computer program comprising:
program codes for causing the host apparatus to execute processing for using data read from the cartridge memory element by the image-forming apparatus to award a prize to a user.

37. A cartridge for an image-forming apparatus, comprising:
a memory element for storing user information for identifying a user of the image-forming apparatus,
wherein the user information is not stored in the memory element at the time of shipping but is written thereto by the image-forming apparatus following installation thereof in the image-forming apparatus,
as a result of which the cartridge makes it possible for an external user management system accessing the user information stored in the memory element to identify a user of the cartridge and perform processing for providing a benefit to the user so identified.

38. An image-forming apparatus in which a cartridge having a memory element can be removably installed, comprising:
a user information acquisition component that acquires user information for identifying a user of this image-forming apparatus; and
a user information writing component that writes the user information to the cartridge memory element following installation of the cartridge in the image-forming apparatus;
as a result of which the image-forming apparatus makes it possible for an external user management system accessing the user information stored in the cartridge memory element to identify a user of the cartridge and perform processing for providing a benefit to the user so identified.

39. An image-forming apparatus in which a cartridge having a memory element can be removably installed, comprising:
a user information acquisition component that acquires user information for identifying a user of this image-forming apparatus;
a cartridge information reading component that reads cartridge information for identifying the cartridge from the cartridge memory element following installation of the cartridge in the image-forming apparatus; and
a notification component that notifies an external user management system of the user information and the cartridge information;
as a result of which the image-forming apparatus makes it possible for the user management system to identify the user and perform processing for providing a benefit to the user so identified.

40. An image-forming apparatus cartridge recovery method comprising:
a step wherein a used cartridge is recovered;
a step wherein information is acquired for identifying a user of the cartridge from an image-forming apparatus in which the cartridge is or was installed or from a memory element of the cartridge so recovered;
a step wherein a user of the cartridge is identified from the information so acquired;
and a step wherein processing is performed for providing a benefit to the user so identified.

41. A method for providing information in online processing fashion from an information-providing server in correspondence to a request from a client connected so as to permit communication with an image-forming apparatus in which a cartridge equipped with a memory element is replaceably installed, the method comprising:
(a) a step wherein the client uses information stored in the memory element to connect to the information-providing server or to gain access to information thereon;
(b) a step wherein the client sends printing environment information indicating a printing environment of the image-forming apparatus to the information-providing server; and
(c) a step wherein the information-providing server sends printing execution information capable of being used to execute printing at the image-forming apparatus connected so as to permit communication with the client to the client in correspondence to information sent to the information-providing server.

42. A method for providing information according to claim 41 wherein the printing execution information comprises control software used by the client or an apparatus connected so as to permit communication with the client during printing using the cartridge.

43. A method for providing information according to claim 41 wherein the printing execution information comprises printing data for supply to the image-forming apparatus.

44. A method for providing information according to claim 41 wherein the step (c) further comprises a step wherein information related to a cartridge capable of being used by the image-forming apparatus is provided to a user of the client.

45. A method for providing information according to any one of claims 41 through 44 wherein
the information stored in the memory element comprises a password that will allow the client to gain permission to access information on the information-providing server; and
the step (a) further comprises a step wherein the client uses the password to connect to the information-providing server or to gain access to information thereon.

46. A method for providing information according to claim 45 wherein the information on the information-providing server that the user is permitted to access varies in correspondence to the password.

47. A method for providing information in online processing fashion from an information-providing server in correspondence to a request from a client connected so as to permit communication with an image-forming apparatus in which a cartridge equipped with a memory element is installed, the method comprising:
a step wherein printing environment information indicating a printing environment of the image-forming apparatus is received from the client; and
a step wherein printing execution information capable of being used to execute printing at the image-forming apparatus connected so as to permit communication with the client is sent to the client in correspondence to information sent to the information-providing server.

48. A method for acquiring information in online processing fashion from an information-providing server, comprising:
a step wherein information stored in a memory element provided in a cartridge installed in an image-forming apparatus connected so as to permit communication with an information acquiring apparatus is used to connect to the information-providing server;
a step wherein printing environment information indicating a printing environment of the image-forming apparatus is sent to the information-providing server; and
a step wherein printing execution information sent from the information-providing server and capable of being used to execute printing at the image-forming apparatus is acquired in correspondence to information sent to the information-providing server.

49. An information-providing apparatus that provides information in online processing fashion from an information-providing server in correspondence to a request from a client connected so as to permit communication with an image-forming apparatus in which a cartridge equipped with a memory element is installed, the information-providing apparatus comprising:
an information receiving component that receives printing environment information indicating a printing environment of the image-forming apparatus from the client; and
an information sending component that sends printing execution information capable of being used to execute printing at the image-forming apparatus connected so as to permit communication with the client to the client in correspondence to information sent to the information-providing server.

50. An information acquiring apparatus that acquires information in online processing fashion from an information-providing server, comprising:
an information-providing server connection component that uses information stored in a memory element provided in a cartridge installed in an image-forming apparatus connected so as to permit communication with an information acquiring apparatus to connect to the information-providing server;
an information sending component that sends printing environment information indicating a printing environment of the image-forming apparatus to the information-providing server; and
an information acquiring component that acquires printing execution information capable of being used to execute printing at the image-forming apparatus in correspondence to information sent to the information-providing server.

51. A computer program for causing a computer to provide information in online processing fashion from an information-providing server in correspondence to a request from a client connected so as to permit communication with an image-forming apparatus in which a cartridge equipped with a memory element is installed, the computer program comprising:
program codes for receiving printing environment information indicating a printing environment of the image-forming apparatus, from the client; and
codes for sending printing execution information capable of being used to execute printing at the image-forming apparatus connected so as to permit communication with the client, to the client in correspondence to information sent to the information-providing server.

52. A computer program for causing a computer to acquire information in online processing fashion from an information-providing server, the computer program comprising:
program codes for connecting to the information-providing server by using information stored in a memory element provided in a cartridge installed in an image-forming apparatus connected so as to permit communication with the computer;
program codes for sending printing environment information indicating a printing environment of the image-forming apparatus, to the information-providing server; and
program codes for acquiring printing execution information capable of being used to execute printing at the image-forming apparatus, in correspondence to information sent to the information-providing server.
